# EUROPEAN PATENT APPLICATION

(11) **EP 4 464 530 A1**
(43) Date of publication of application: **20.11.2024**
(21) Application number: 23830097.4
(22) Date of filing: 21.06.2023
(51) Int. Cl.: B60K 6/40, F16H 37/00

(54) **HYBRID DRIVE SYSTEM, GEARBOX AND VEHICLE**

(30) Priority: 30.06.2022 CN 202210764226
(71) Applicant: Huawei Digital Power Technologies Co., Ltd., Shenzhen, Guangdong 518043 (CN)
(72) Inventor: WEI, Jingzhou, Shenzhen, Guangdong 518043 (CN); GUO, Yao, Shenzhen, Guangdong 518043 (CN); ZHANG, Shuai, Shenzhen, Guangdong 518043 (CN); WANG, Shaohua, Shenzhen, Guangdong 518043 (CN)
(74) Representative: Maiwald GmbH
(86) International application number: PCT/CN2023/101839
(87) International publication number: WO 2024/001918

(57) **Abstract**

A hybrid power drive system is provided, including an engine (100), a gearbox (400), a drive motor (200), and a generator (300). The gearbox (400) includes a first input end (401), a second input end (402), and a first output end (403). Both the first input end (401) and the second input end (402) are in transmission connection with the first output end (403). An output shaft (101) of the engine (100) is in transmission connection with the first input end (401), and the first output end (403) is configured to provide power for wheels (12). An output shaft (201) of the drive motor (200) is in transmission connection with the second input end (402), and the drive motor (200) is configured to output power to the second input end (402). In an axial direction of the engine (100), the drive motor (200) and the engine (100) are located on a same side of the gearbox (400). An input shaft (301) of the generator (300) is in transmission connection with the output shaft (101) of the engine (100). The engine and the drive motor are disposed on the same side of the gearbox, so that a dimension of the hybrid power drive system in the axial direction can be reduced, and the hybrid power drive system has a small volume and can be mounted in a narrow mounting position in a vehicle. The gearbox and the vehicle are further provided.

## Description

This application claims priority to Chinese Patent Application No. 202210764226.3, filed with the China National Intellectual Property Administration on June 30, 2022, and entitled "HYBRID POWER DRIVE SYSTEM, GEARBOX, AND VEHICLE", which is incorporated herein by reference in its entirety.

### TECHNICAL FIELD

This application relates to the field of vehicle technologies, and in particular, to a hybrid power drive system, a gearbox, and a vehicle.

### BACKGROUND

A hybrid vehicle (hybrid vehicle) is a vehicle whose drive system is composed of two or more single drive systems that can operate simultaneously. Based on an actual traveling state of the vehicle, traveling power of the hybrid vehicle is independently provided by a single drive system, or provided by the two or more single drive systems together. Generally, the hybrid vehicle is provided with an engine, a generator, and a drive motor. The engine converts other forms of energy into kinetic energy and provides power to the generator. The generator is configured to charge a battery, and the battery provides electric energy to the drive motor, so that the drive motor can drive wheels to move. The engine may alternatively directly provide the kinetic energy to the wheels to drive the wheels to move. In a current solution, a generator and a drive motor are arranged on a same side of a gearbox and opposite to an engine, so that a drive system has a large dimension in an axial direction and cannot be mounted in a spatial position with a small dimension in the axial direction.

### SUMMARY

This application provides a hybrid power drive system capable of reducing a dimension in an axial direction, a gearbox, and a vehicle including the hybrid power drive system.

According to a first aspect, this application provides a hybrid power drive system, including an engine, a gearbox, a drive motor, and a generator. The engine is configured to output power. The gearbox includes a first input end, a second input end, and a first output end. Both the first input end and the second input end are in transmission connection with the first output end. An output shaft of the engine is in transmission connection with the first input end, and the first output end is configured to provide power for wheels. An output shaft of the drive motor is in transmission connection with the second input end, and the drive motor is configured to output power to the second input end. In an axial direction of the engine, the drive motor and the engine are located on a same side of the gearbox. An input shaft of the generator is in transmission connection with the output shaft of the engine.

In this application, the axial direction of the engine is a first direction. Generally, a dimension of the drive motor in the first direction is less than a dimension of the engine in the first direction. The drive motor and the engine are disposed on the same side of the gearbox, and a dimension of a side that is of the gearbox and that is close to the engine depends on a dimension of the engine. The dimension of the drive motor in the first direction does not increase a dimension of the hybrid power drive system in the first direction. The dimension of the hybrid power drive system in the first direction is a distance between the leftmost end of the engine and the rightmost end of the generator, and this distance is a first distance.

When the generator is located on a side that is of the gearbox and that is away from the engine, the drive motor and the generator are disposed on a same side if the drive motor and the engine are disposed on different sides of the gearbox. When a dimension of the generator in the axial direction is less than a dimension of the drive motor in the axial direction, the dimension of the hybrid power drive system in the first direction is a distance between the leftmost end of the engine and the rightmost end of the drive motor, and this distance is a second distance. To meet an overall appearance arrangement requirement or a transmission requirement, a transmission mechanism is disposed between the engine and the generator, so that the drive motor is aligned with a tail end of the generator. In this case, a distance between the leftmost end of the engine and the rightmost end of the generator is also the second distance. However, in this application, when the engine and the drive motor are disposed on the same side, the transmission mechanism between the engine and the generator may be simplified, so that a dimension between the leftmost end of the engine and the rightmost end of the generator in the axial direction is reduced, and the first distance is less than the second distance. In other words, in this application, the drive motor and the engine are disposed on the same side of the gearbox, so that the dimension of the hybrid power drive system in the first direction can be reduced.

When the generator is mounted between the engine and the gearbox, the engine, the generator, and the drive motor are located on the same side of the gearbox. In this case, the dimension of the hybrid power drive system in the first direction is a distance between the leftmost end of the engine and the rightmost end of the gearbox. If the drive motor is disposed on the side that is of the gearbox and that is away from the engine, the dimension of the hybrid power drive system in the first direction is the distance between the leftmost end of the engine and the rightmost end of the drive motor. It is evident that a dimension of the hybrid power drive system in the first direction when the drive motor and the engine are located on different sides of the gearbox is greater than the dimension of the hybrid power drive system in the first direction when the drive motor and the engine are located on the same side of the gearbox.

When a space dimension in which the hybrid power drive system can be mounted in a vehicle is small, mounting is more convenient by using the hybrid power drive system in this application. In other words, the hybrid power drive system in this application can reduce a dimension that occupies the vehicle in the first direction, so that another functional component can be mounted in the vehicle in the first direction, to improve overall performance of the vehicle.

In a possible implementation, the gearbox further includes a second output end, the first input end is further in transmission connection with the second output end, and the input shaft of the generator is in transmission connection with the second output end. In the axial direction of the engine, the generator is located on a side that is of the gearbox and that is away from the engine.

In a possible implementation, the gearbox includes a second gear transmission mechanism and a clutch. An input end of the second gear transmission mechanism is in transmission connection with the first input end, and an output end of the second gear transmission mechanism is in transmission connection with the first output end. The clutch is configured to connect the second gear transmission mechanism to the first output end or separate the second gear transmission mechanism from the first output end. The second gear transmission mechanism includes a first intermediate shaft, and the clutch is mounted on the first intermediate shaft. The first intermediate shaft and the output shaft of the engine are arranged in a direction intersecting with an axial direction of the first intermediate shaft.

The clutch is mounted on the first intermediate shaft of the second gear transmission mechanism instead of on the output shaft of the engine. In this way, a dimension of the output shaft of the engine in the axial direction is shortened because a dimension of the engine in the axial direction is not occupied. In an embodiment, the direction intersecting with the axial direction of the first intermediate shaft is a direction perpendicular or substantially perpendicular to the axial direction of the first intermediate shaft.

In a possible implementation, connection lines between the output shaft of the engine, the input shaft of the generator, and the first intermediate shaft form a triangle, to fully reduce an occupied spatial position and reduce space.

In a possible implementation, the second gear transmission mechanism includes a second driven gear and a second drive gear that are mounted on the first intermediate shaft. An input end of the second driven gear is in transmission connection with the first input end, and the second driven gear is fastened to the first intermediate shaft. The first intermediate shaft is fastened to an input end of the clutch, and an output end of the clutch is fastened to the second drive gear. The second drive gear is in transmission connection with the first output end. Power is transmitted through the second driven gear and the second drive gear. Specifically, the second driven gear receives the power transmitted from the first input end and transmits the power to the first intermediate shaft, the first intermediate shaft transmits the power to the clutch, the connected clutch transmits the power to the second drive gear, and the second drive gear transmits the power to the first output end.

In a possible implementation, the second drive gear is located between the second driven gear and the clutch in the axial direction of the first intermediate shaft. Disposing the second drive gear between the second driven gear and the clutch facilitates reducing a dimension of the gearbox in the first direction. In this way, the hybrid power drive system is more compact and has a smaller volume.

In a possible implementation, the clutch is located between the second driven gear and the second drive gear in the axial direction of the first intermediate shaft. This implementation may be applied to a scenario in which mounting space is large, so that the hybrid power drive system in this application has a wider application range.

In a possible implementation, the generator at least partially overlaps the clutch in an axial direction of the clutch. Enabling the generator closer to the gearbox makes the dimension between the leftmost end of the engine and the rightmost end of the generator in the axial direction smaller.

In a possible implementation, the second gear transmission mechanism further includes a first idler gear, and the first idler gear is mounted between the first input end and the second driven gear.

The first idler gear may change a rotation direction input by the second driven gear, so that a rotation direction of a differential output shaft is changed. The gearbox may be applicable to different application scenarios, and may adapt to a case in which an exhaust pipe is disposed in front of the engine. For example, in a first implementation, the exhaust pipe is disposed at the rear of the engine. When a rotation direction of the output shaft of the engine is a clockwise direction, the rotation direction of the differential output shaft is the same as a forward direction. In a second implementation, the exhaust pipe is disposed in front of the engine. When a rotation direction of the output shaft of the engine is a counterclockwise direction, a rotation direction input by the second driven gear may be enabled by using the first idler gear to be the same as the rotation direction input by the second driven gear in the first implementation, to ensure that the rotation direction of the differential output shaft is the same as the forward direction.

The first idler gear may further increase a distance between the first intermediate shaft and the output shaft of the engine, so that a side that is of the gearbox and that faces the engine has large space. This helps place the drive motor and the engine on the same side.

In a possible implementation, the second gear transmission mechanism further includes a third intermediate shaft, and the first idler gear is mounted on the third intermediate shaft. The third intermediate shaft may also be referred to as a first idler gear shaft.

In a possible implementation, in the axial direction of the engine, the generator is located on the side that is of the gearbox and that is away from the engine. The gearbox further includes a first gear transmission mechanism, and the first gear transmission mechanism is located between the engine and the generator. An input end of the first gear transmission mechanism is the first input end, the input end of the first gear transmission mechanism is in transmission connection with the output shaft of the engine, and an output end of the first gear transmission mechanism is in transmission connection with the input shaft of the generator. The output end of the first gear transmission mechanism is further in transmission connection with the input end of the second gear transmission mechanism. The power output by the engine is transmitted to the generator and the second gear transmission mechanism through the first gear transmission mechanism.

In a possible implementation, the first gear transmission mechanism includes a first drive gear, the first drive gear is mounted between the engine and the generator, the first drive gear is fastened to the output shaft of the engine, the generator and the engine are coaxially disposed, and the second gear transmission mechanism is in transmission connection with the first drive gear.

In this implementation, no speed increasing gear is disposed between the engine and the generator, and this may be applicable to an application scenario in which no speed increasing is required. The first idler gear is meshed between the first drive gear and the second driven gear, so that the rotation direction input by the second driven gear may be changed, and the rotation direction of the differential output shaft is changed. The gearbox may be applicable to different application scenarios, and may adapt to the case in which the exhaust pipe is disposed in front of the engine. The first idler gear may further increase the distance between the first intermediate shaft and the output shaft of the engine, so that the side that is of the gearbox and that faces the engine has the large space. This helps place the drive motor and the engine on the same side.

In a possible implementation, the first gear transmission mechanism includes a first drive gear and a first driven gear, the first drive gear is mounted on the output shaft of the engine, the first driven gear is mounted on the input shaft of the generator, the first drive gear is in transmission connection with the first driven gear, and the second gear transmission mechanism is in transmission connection with the first drive gear. The first gear transmission mechanism is a speed increasing gear mechanism, and can optimize a workspace of the generator when the generator generates power, thereby improving power generation efficiency of the generator. For example, a quantity of gears of the first drive gear is greater than a quantity of gears of the first driven gear. For example, a radius of the first drive gear is greater than a radius of the first driven gear. In this implementation, the first gear transmission mechanism is a first-stage speed increasing gear, and the first-stage speed increasing gear can meet a speed increasing requirement and reduce a space dimension. In some implementations, when space of the hybrid power drive system is large enough, the first gear transmission mechanism may alternatively be a second-stage or higher-stage speed increasing gear. In some implementations, the first gear transmission mechanism may alternatively be a planetary gear.

In this implementation, no clutch is disposed between an output end of the engine and the input shaft of the generator. There is only one first drive gear on the output shaft of the engine, there is only one first driven gear on the input shaft of the generator, and there is only a dimension of one gear in axial directions of the engine and the generator. For example, dimensions of the engine and the generator in the axial direction are reduced only when a dimension of the first drive gear or the first driven gear in the axial direction is reduced. Further, the dimension of the hybrid power drive system in the first direction is reduced. This enables the hybrid power drive system to be more compact.

In this implementation, the first gear transmission mechanism includes the first drive gear and the first driven gear. The first drive gear is meshed with the first driven gear to increase a distance between the output shaft of the engine and the input shaft of the generator, so that the generator can approach the first gear transmission mechanism as close as possible, to reduce a dimension between the leftmost end of the engine and the rightmost end of the generator in the first direction.

In a possible implementation, the first gear transmission mechanism further includes a first drive gear, a first driven gear, and a first speed reducing gear. The first drive gear and the first speed reducing gear are mounted on the output shaft of the engine, and the first speed reducing gear is located on a side that is of the first drive gear and that is away from the engine. The first driven gear is mounted on the input shaft of the generator, the first drive gear is in transmission connection with the first driven gear, and the second gear transmission mechanism is in transmission connection with the first speed reducing gear. In this implementation, the first drive gear and the first speed reducing gear are disposed on the output shaft of the engine, so that speed reducing can be effectively performed when the power output by the engine is transmitted to the second gear transmission mechanism. A speed reducing interval is expanded, and a wider application range can be used.

In a possible implementation, the generator is mounted on the output shaft of the engine, the gearbox further includes a first gear transmission mechanism, the generator is located between the first gear transmission mechanism and the engine, an input end of the first gear transmission mechanism is the first input end, the input end of the first gear transmission mechanism is in transmission connection with the output shaft of the engine, and an output end of the first gear transmission mechanism is in transmission connection with the input end of the second gear transmission mechanism.

In a possible implementation, in the axial direction of the engine, the generator is located on the side that is of the gearbox and that is away from the engine. The gearbox further includes a first gear transmission mechanism and a clutch, and the clutch is mounted on the output shaft of the engine. The first gear transmission mechanism includes a first drive gear, a third idler gear, and a first driven gear. The first drive gear is mounted on the output shaft of the engine, the first driven gear is mounted on the input shaft of the generator, and the third idler gear is located between the first drive gear and the first driven gear. An input end of the clutch is fastened to the output shaft of the engine, and an output end of the clutch is in transmission connection with the first output end. In this implementation, the clutch is mounted on the output shaft of the engine, so that the output shaft of the engine lengthens. To be able to place the generator on a circumferential side of the clutch, the third idler gear is added between the first drive gear and the first driven gear. In this way, a distance between the input shaft of the generator and the output shaft of the engine is increased, so that the generator can be disposed closer to the first driven gear. This can reduce a dimension of the hybrid power drive system in the axial direction. In this implementation, an application scenario scope of the hybrid power drive system can be expanded

In a possible implementation, the first gear transmission mechanism further includes a first output gear mounted on the output shaft of the engine and located between the first drive gear and the clutch, the first output gear is fastened to the output end of the clutch, and the first output gear is in transmission connection with the first output end. The power is transmitted to the first output end through the first output gear. In this implementation, the first output gear is located on a side that is of the clutch and that faces the engine, so that the second gear transmission mechanism that is in transmission connection with the first output gear is disposed close to a side of the engine. This reduces a dimension of the gearbox in the axial direction.

In a possible implementation, the second gear transmission mechanism includes the second driven gear, the second drive gear, and the first intermediate shaft. The second driven gear and the second drive gear are mounted on the first intermediate shaft, the second driven gear is in transmission connection with the first output gear, and the second drive gear is meshed with a common driven gear. Power is transmitted to the common driven gear through the second driven gear and the second drive gear.

In a possible implementation, the first gear transmission mechanism further includes a first output gear mounted on the output shaft of the engine and located on a side that is of the clutch and that is away from the first drive gear, the first output gear is fastened to the output end of the clutch, and the first output gear is in transmission connection with the first output end. In this implementation, the application scenario scope of the hybrid power drive system can be expanded.

In a possible implementation, the gearbox further includes a first gear transmission mechanism and a clutch. Both the generator and the clutch are mounted on the output shaft of the engine and are located between the engine and the first gear transmission mechanism. An input end of the clutch is fastened to the output shaft of the engine, and an output end of the clutch is fastened to an input end of the first gear transmission mechanism. An output end of the first gear transmission mechanism is in transmission connection with the first output end.

In a possible implementation, the gearbox further includes a common driven gear and a differential, the common driven gear is in transmission connection with the output end of the clutch, the differential and the common driven gear are coaxially disposed, an output end of the differential is the first output end, and the output end of the differential is configured to provide power for the wheels.

The differential is a mechanism that can make the left and right (or front and rear) wheels rotate at different speeds. The gearbox further includes a differential output shaft. The common driven gear and the differential are coaxially disposed on the differential output shaft, and the common driven gear is fastened to the differential output shaft, to transmit power of the common driven gear to the differential output shaft. Two ends of the differential output shaft are connected to two wheels to drive the wheels to rotate. The two ends of the differential output shaft are output ends of the differential, and are also first output ends. The common driven gear is further in transmission connection with an output end of the drive motor. In some modes, the common driven gear is in transmission connection with the drive motor, and the drive motor provides power for the differential. In some modes, the common driven gear is in transmission connection with the engine, and the engine provides power for the differential.

In a possible implementation, the gearbox further includes a second idler gear mounted between the clutch and the common driven gear, and the second idler gear is meshed with the output end of the clutch and the common driven gear.

The second idler gear is meshed between the second drive gear and the common driven gear. The second idler gear is disposed, so that a rotation direction output by the second driven gear may be changed, and a rotation direction of the differential output shaft is changed. The gearbox may be applicable to different application scenarios, and may adapt to a case in which an exhaust pipe is disposed in front of the engine. The second idler gear may further increase a distance between the differential output shaft and the output shaft of the engine, so that a side that is of the gearbox and that faces the engine has large space. This helps place the drive motor and the engine on the same side.

In a possible implementation, the second gear transmission mechanism further includes a fourth intermediate shaft, and the second idler gear is mounted on the fourth intermediate shaft. The fourth intermediate shaft may be referred to as a second idler gear shaft.

In a possible implementation, the gearbox further includes a third gear transmission mechanism located between the common driven gear and the drive motor, an input end of the third gear transmission mechanism is the second input end, and an output end of the third gear transmission mechanism is in transmission connection with the common driven gear. Driving force of the drive motor is transmitted to the common driven gear through the third gear transmission mechanism.

In a possible implementation, the third gear transmission mechanism includes a first-stage drive gear, a first-stage driven gear, a second-stage drive gear, and a second intermediate shaft. The first-stage drive gear is coaxially disposed on and fastened to the output shaft of the drive motor, and the first-stage drive gear is meshed with the first-stage driven gear. The third gear transmission mechanism is a speed reducing gear. For example, a quantity of gears of the first-stage drive gear is less than a quantity of gears of the first-stage driven gear. For example, a radius of the first-stage drive gear is less than a radius of the first-stage driven gear. The first-stage driven gear and the second-stage drive gear are sleeved on and fastened to the second intermediate shaft, and the second-stage drive gear is meshed with the common driven gear, so that the input end of the third gear transmission mechanism is in transmission connection with the common driven gear, and the third gear transmission mechanism is a second-stage speed reducing gear. In this implementation, the second-stage speed reducing gear can meet a speed reducing requirement and reduce the space dimension. In some implementations, when the space of the hybrid power drive system is large enough, the third gear transmission mechanism may alternatively be a third-stage or higher-stage speed reducing gear.

In a possible implementation, the first-stage driven gear is disposed on a side that is of the second-stage driven gear and that is away from the engine, so that the first-stage driven gear and the clutch are arranged in a direction intersecting with the first direction. This can fully use space in the gearbox and enable a structure of the gearbox to be more compact. In addition, space on a side that is of the third gear transmission mechanism and that faces the engine is reserved for accommodating at least a part of the drive motor.

In a possible implementation, the drive motor and the differential at least partially overlap in an axial direction of the drive motor. The drive motor is disposed on a side that is of the third gear transmission mechanism and that faces the engine, and the drive motor and the differential at least partially overlap in the first direction, so that the drive motor is closer to the gearbox. In this way, the hybrid power drive system has a more compact structure and the smaller volume.

In a possible implementation, connection lines between the output shaft of the engine, the output shaft of the drive motor, and the input shaft of the generator form a triangle. This also reduces a spatial layout volume and reduces space.

In a possible implementation, the third gear transmission mechanism includes the first-stage drive gear and the first-stage driven gear, the first-stage drive gear is mounted on the output shaft of the drive motor, the first-stage driven gear is meshed with the first-stage drive gear, and the first-stage driven gear is also meshed with the common driven gear. The first-stage driven gear is mounted on the second intermediate shaft.

In a possible implementation, the third gear transmission mechanism further includes a fourth idler gear and a sixth intermediate shaft. The fourth idler gear is mounted on the sixth intermediate shaft, and the fourth idler gear is located between the first-stage drive gear and the first-stage driven gear. The fourth idler gear is meshed with the first-stage drive gear and the first-stage driven gear. In this implementation, a distance between the second intermediate shaft and the output shaft of the drive motor may be increased by using the fourth idler gear, to provide accommodation space for the drive motor. This helps mount the drive motor and the engine on the same side.

In a possible implementation, the hybrid power drive system further includes a housing, and the engine, the drive motor, the generator, and the gearbox are located in the housing.

In an implementation, a housing of at least one of the engine, the drive motor, the generator, and the gearbox may be a separate housing.

In an implementation, housings of at least two of the engine, the drive motor, the generator, and the gearbox are an integrated housing. This may be specifically disposed based on a requirement. This is not limited in this application.

In a possible implementation, the engine, the drive motor, the generator, and the gearbox are integrated into an integrated structure, to reduce the volume.

In a possible implementation, the engine, the drive motor, the generator, the gearbox, and a controller are integrated into an integrated structure, to reduce the volume.

In a possible implementation, the hybrid power drive system may include only the engine, the drive motor, the generator, and the gearbox, and may be connected to the controller and a power battery through a cable or a connector.

In a possible implementation, a vehicle-mounted charger or another vehicle-mounted functional component may be further integrated into the hybrid power drive system, to reduce occupied internal space of the vehicle.

According to a second aspect, this application provides a gearbox. The gearbox includes a gearbox body, a first output end, a first input end, and a second input end. Both the first input end and the second input end are in transmission connection with the first output end through the gearbox body. In an axial direction of the first input end, the first input end and the second input end are located on a same side of the gearbox body.

The first input end is configured to be in transmission connection with an output end of an engine disposed on the side of the gearbox body, and is configured to receive power output by the engine; and the first input end is further configured to be in transmission connection with a generator.

The second input end is configured to be in transmission connection with an output end of a drive motor disposed on the side of the gearbox body, and is configured to receive power output by the drive motor.

The first output end is configured to: receive the power transmitted by the first input end or the second input end, and provide the power to wheels.

In this solution, the first input end and the second input end are disposed on the same side of the gearbox body, so that the engine connected to the first input end and the drive motor connected to the second input end are located on the same side of the gearbox body. This can reduce a dimension of the hybrid power drive system in the axial direction.

In a possible implementation, the gearbox body includes a second gear transmission mechanism and a clutch. An input end of the second gear transmission mechanism is in transmission connection with the first input end, and an output end of the second gear transmission mechanism is in transmission connection with the first output end. The clutch is configured to connect the second gear transmission mechanism to the first output end or separate the second gear transmission mechanism from the first output end. The second gear transmission mechanism includes a first intermediate shaft, and the clutch is mounted on the first intermediate shaft. The first intermediate shaft and an output shaft of the engine are arranged in a direction intersecting with an axial direction of the first intermediate shaft.

In a possible implementation, the second gear transmission mechanism includes a second driven gear and a second drive gear that are mounted on the first intermediate shaft. An input end of the second driven gear is in transmission connection with the first input end, and the second driven gear is fastened to the first intermediate shaft. The first intermediate shaft is fastened to an input end of the clutch, and an output end of the clutch is fastened to the second drive gear. The second drive gear is in transmission connection with the first output end.

In a possible implementation, the second drive gear is located between the second driven gear and the clutch in the axial direction of the first intermediate shaft.

In a possible implementation, the clutch is located between the second driven gear and the second drive gear in the axial direction of the first intermediate shaft.

In a possible implementation, the second gear transmission mechanism further includes a first idler gear, and the first idler gear is mounted between the first input end and the second driven gear.

In a possible implementation, the gearbox body further includes a second output end, and the second output end is in transmission connection with the first input end. In an axial direction of the first output end, the second output end is located on a side that is of the gearbox body and that is away from the first input end. The second output end is configured to be in transmission connection with the generator.

The gearbox body further includes a first gear transmission mechanism, and the first gear transmission mechanism is located between the engine and the generator. An input end of the first gear transmission mechanism is the first input end, and the input end of the first gear transmission mechanism is in transmission connection with the output shaft of the engine. An output end of the first gear transmission mechanism is in transmission connection with the second output end, and the output end of the first gear transmission mechanism is further in transmission connection with the input end of the second gear transmission mechanism.

In a possible implementation, the first gear transmission mechanism includes a first drive gear, the first drive gear is configured to be mounted between the engine and the generator, the first drive gear is configured to be fastened to the output shaft of the engine, the generator and the engine are coaxially disposed, and the second gear transmission mechanism is in transmission connection with the first drive gear.

In a possible implementation, the first gear transmission mechanism includes a first drive gear and a first driven gear, the first drive gear is configured to be mounted on the output shaft of the engine, the first driven gear is configured to be mounted on an input shaft of the generator, the first drive gear is in transmission connection with the first driven gear, and the second gear transmission mechanism is in transmission connection with the first drive gear.

In a possible implementation, the first gear transmission mechanism further includes a first drive gear, a first driven gear, and a first speed reducing gear. The first drive gear and the first speed reducing gear are configured to be mounted on the output shaft of the engine, and the first speed reducing gear is located on a side that is of the first drive gear and that is away from the engine. The first driven gear is configured to be mounted on an input shaft of the generator, and the second gear transmission mechanism is in transmission connection with the first speed reducing gear.

In a possible implementation, the gearbox further includes a first gear transmission mechanism. An input end of the first gear transmission mechanism is the first input end, and the input end of the first gear transmission mechanism is configured to be in transmission connection with the output shaft of the engine. The input end of the first gear transmission mechanism is further configured to mount the generator, and the generator is mounted on the output shaft of the engine. The generator is located between the first gear transmission mechanism and the engine, and an output end of the first gear transmission mechanism is in transmission connection with the input end of the second gear transmission mechanism.

In a possible implementation, the gearbox further includes a first gear transmission mechanism and a clutch. The clutch is configured to be mounted on the output shaft of the engine, and the first gear transmission mechanism includes a first drive gear, a third idler gear, and a first driven gear. The first drive gear is configured to be mounted on the output shaft of the engine, so that the generator is located on a side that is of the gearbox body and that is away from the engine. The first driven gear is configured to be mounted on the input shaft of the generator, and the third idler gear is located between the first drive gear and the first driven gear. An input end of the clutch is configured to be fastened to the output shaft of the engine, and an output end of the clutch is in transmission connection with the first output end.

In a possible implementation, the first gear transmission mechanism further includes a first output gear configured to be mounted on the output shaft of the engine and located between the first drive gear and the clutch, the first output gear is fastened to the output end of the clutch, and the first output gear is in transmission connection with the first output end.

In a possible implementation, the first gear transmission mechanism further includes a first output gear configured to be mounted on the output shaft of the engine and located on a side that is of the clutch and that is away from the first drive gear, the first output gear is fastened to the output end of the clutch, and the first output gear is in transmission connection with the first output end.

In a possible implementation, the gearbox body further includes a first gear transmission mechanism and a clutch. Both the generator and the clutch are configured to be mounted on the output shaft of the engine and located between the engine and the first gear transmission mechanism. An input end of the clutch is configured to be fastened to the output shaft of the engine, an output end of the clutch is fastened to an input end of the first gear transmission mechanism, and an output end of the first gear transmission mechanism is in transmission connection with the first output end.

In a possible implementation, the gearbox body further includes:
a common driven gear, where the common driven gear is in transmission connection with the output end of the clutch; and
a differential, where the differential and the common driven gear are coaxially disposed, an output end of the differential is the first output end, and the output end of the differential is configured to provide power for the wheels.

In a possible implementation, the gearbox further includes a second idler gear mounted between the clutch and the common driven gear, and the second idler gear is meshed with the output end of the clutch and the common driven gear.

In a possible implementation, the gearbox body further includes a third gear transmission mechanism located between the common driven gear and the drive motor, an input end of the third gear transmission mechanism is the second input end, and an output end of the third gear transmission mechanism is in transmission connection with the common driven gear.

According to a third aspect, this application provides a vehicle, including a vehicle body, wheels, and the hybrid power drive system according to any one of the foregoing implementations or the gearbox according to any one of the foregoing implementations. The hybrid power drive system or the gearbox is mounted on the vehicle body, and a differential in the hybrid power drive system or the gearbox is in transmission connection with the wheels. The hybrid power drive system in this application is used, so that a dimension of the vehicle in a first direction can be reduced. The hybrid power drive system in this application may be mounted in a vehicle with a narrow dimension in the axial direction.

### BRIEF DESCRIPTION OF DRAWINGS

To describe technical solutions in embodiments of this application more clearly, the following describes accompanying drawings used in describing embodiments of this application.
FIG. 1 is a schematic diagram of a structure of a vehicle according to an embodiment of this application;
FIG. 2 is a schematic diagram of a hybrid power drive system according to an embodiment of this application;
FIG. 3 is a schematic diagram of a hybrid power drive system according to an embodiment of this application;
FIG. 4 is a schematic diagram of distributing an engine and a drive motor in a hybrid power drive system on different sides of a gearbox;
FIG. 5 is a schematic diagram of a structure of a hybrid power drive system according to a first embodiment of this application;
FIG. 6 is a schematic diagram of power transfer when a hybrid power drive system is in an electric drive mode according to a first embodiment of this application;
FIG. 7 is a schematic diagram of power transfer when a hybrid power drive system is in a serial extended range mode according to a first embodiment of this application;
FIG. 8 is a schematic diagram of power transfer when a hybrid power drive system is in a parallel drive mode according to a first embodiment of this application;
FIG. 9 is a schematic diagram of power transfer when a hybrid power drive system is in an engine direct drive mode according to a first embodiment of this application;
FIG. 10 is a schematic diagram of power transfer when a hybrid power drive system is in a combined drive mode according to a first embodiment of this application;
FIG. 11 is a schematic diagram of a structure of a hybrid power drive system according to a second embodiment of this application;
FIG. 12 is a schematic diagram of a structure of a hybrid power drive system according to a third embodiment of this application;
FIG. 13 is a schematic diagram of a structure of a hybrid power drive system according to a fourth embodiment of this application;
FIG. 14 is a schematic diagram of a structure of a hybrid power drive system according to a fifth embodiment of this application;
FIG. 15 is a schematic diagram of a structure of a hybrid power drive system according to a sixth embodiment of this application;
FIG. 16 is a schematic diagram of a structure of a hybrid power drive system according to a seventh embodiment of this application;
FIG. 17 is a schematic diagram of a structure of a hybrid power drive system according to an eighth embodiment of this application;
FIG. 18 is a schematic diagram of a structure of a hybrid power drive system according to a ninth embodiment of this application;
FIG. 19 is a schematic diagram of a structure of a hybrid power drive system according to a tenth embodiment of this application;
FIG. 20 is a schematic diagram of a structure of a hybrid power drive system according to an eleventh embodiment of this application;
FIG. 21 is a schematic diagram of a structure of a hybrid power drive system according to a twelfth embodiment of this application;
FIG. 22 is a schematic diagram of a structure of a hybrid power drive system according to a thirteenth embodiment of this application;
FIG. 23 is a schematic diagram of a structure of a hybrid power drive system according to a fourteenth embodiment of this application;
FIG. 24 is a schematic diagram of a structure of a hybrid power drive system according to a fifteenth embodiment of this application;
FIG. 25 is a schematic diagram of a structure of a hybrid power drive system according to a sixteenth embodiment of this application;
FIG. 26 is a schematic diagram of a structure of a gearbox according to a seventeenth embodiment of this application; and
FIG. 27 is a schematic diagram of a structure of a gearbox according to an embodiment of this application.

### DESCRIPTION OF EMBODIMENTS

The following describes technical solutions in embodiments of this application with reference to accompanying drawings in embodiments of this application. Apparently, the described embodiments are merely some rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, orientation terms such as "above" and "below" are defined relative to orientations of schematically disposed structures in the accompanying drawings. It should be understood that these directional terms are relative concepts and are used for relative description and clarification, and may vary accordingly with changes of the orientations of the structures.

For ease of understanding, the following first explains and describes related technical terms in embodiments of this application.

A transmission ratio is a ratio of angular velocities of two rotating members in a mechanism, and is also referred to as a velocity ratio. For example, a transmission ratio of a first drive gear to a first driven gear is a ratio of an angular velocity of the first drive gear to an angular velocity of the first driven gear.

A transmission connection is a manner in which two components are fastened to each other, or a manner in which two components are meshed with each other through one or more than two gear components, so that motion between the two components can be transferred to each other. For example, a first input end is in transmission connection with a first output end, so that the first input end can drive the first output end to move.

This application provides a hybrid power drive system, including an engine, a gearbox, a drive motor, and a generator. The gearbox includes a first input end, a second input end, and a first output end. Both the first input end and the second input end are in transmission connection with the first output end. An output shaft of the engine is in transmission connection with the first input end, and the first output end is configured to provide power for wheels. An output shaft of the drive motor is in transmission connection with the second input end, and the drive motor is configured to output power to the second input end. In an axial direction of the engine, the drive motor and the engine are located on a same side of the gearbox. An input shaft of the generator is in transmission connection with the output shaft of the engine. In this application, the engine and the drive motor are disposed on the same side of the gearbox, so that a dimension of the hybrid power drive system in the axial direction can be reduced, and the hybrid power drive system has a small volume and can be mounted in a narrow mounting position in a vehicle.

The hybrid power drive system in this application may be used in the vehicle, and the hybrid power drive system is configured to provide power for the vehicle. The vehicle is a wheeled vehicle that is driven or guided by a power apparatus and is used for passengers traveling on a road or for transporting articles and performing special engineering operations. The vehicle includes a three-wheeled or four-wheeled vehicle. The vehicle includes a car, an off-road vehicle, a bus, a truck, and the like. The vehicle further includes various special operation vehicles with specific functions, for example, an engineering rescue vehicle, a street sprinkler, a suction-type sewer scavenger, a cement mixer, a crane, and a medical vehicle. The vehicle may alternatively be a robot that can travel.

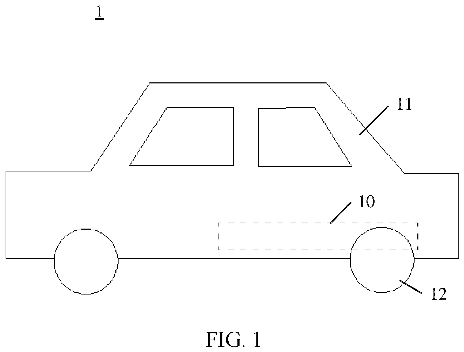

FIG. 1 is a schematic diagram of a structure of a vehicle 1 according to an embodiment of this application. The vehicle 1 includes a vehicle body 11, wheels 12, and a hybrid power drive system 10. The hybrid power drive system 10 is mounted on the vehicle body 11, and the hybrid power drive system 10 is in transmission connection with the wheels 12. In this implementation, the vehicle 1 is a vehicle. The hybrid power drive system 10 can drive the wheels 12 to rotate, to be specific, the vehicle 1 is a hybrid vehicle. There may be three or more wheels 12 of the vehicle 1. This is not limited in this application.

The following describes in detail the hybrid power drive system in this application.

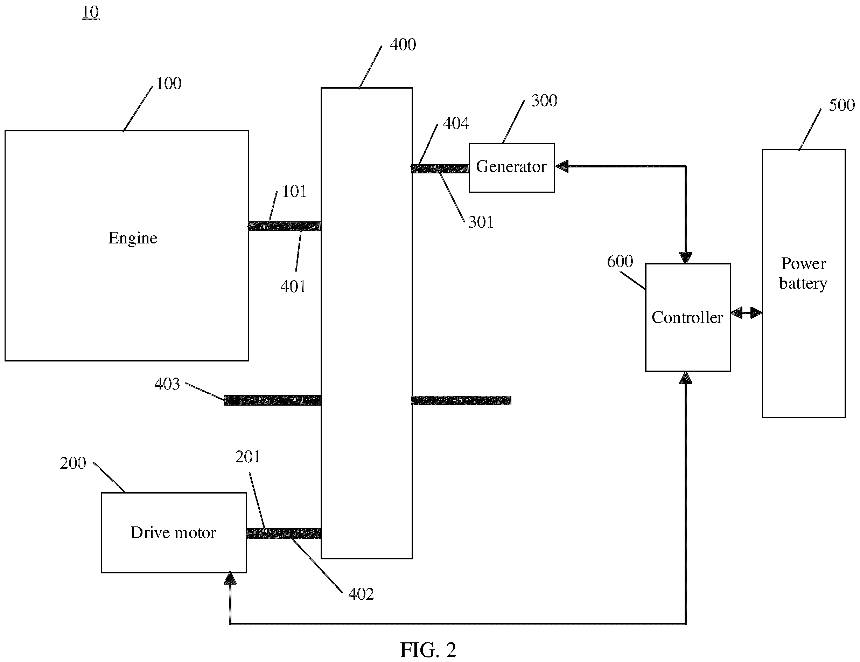

FIG. 2 is a schematic diagram of the hybrid power drive system 10 according to a first embodiment of this application. The hybrid power drive system 10 includes an engine 100, a drive motor 200, a generator 300, a gearbox 400, a power battery 500, and a controller 600. The engine 100 is configured to output power. For example, the engine 100 may be a gasoline engine, or may be a diesel engine. The generator 300 is in transmission connection with the engine 100, the engine 100 provides the power to the generator 300, and the generator 300 converts kinetic energy output by the engine 100 into electric energy. The generator 300 is electrically connected to the power battery 500, and the generator 300 may charge the power battery 500 through the controller 600. The drive motor 200 is electrically connected to the power battery 500, and the power battery 500 may supply power to the drive motor 200 through the controller 600. The drive motor 200 is configured to convert electric energy output by the power battery 500 into kinetic energy. The generator 300 and the drive motor 200 are connected to the wheels 12 through the gearbox 400, to provide power for the wheels 12 and drive the wheels 12 to move. The controller 600 is electrically connected to the engine 100, the drive motor 200, the generator 300, and the gearbox 400, and is configured to control and switch a power mode of the hybrid power drive system 10.

The gearbox 400 includes a first input end 401, a second input end 402, a first output end 403, and a second output end 404. Both the first input end 401 and the second input end 402 are in transmission connection with the first output end 403 through a gear structure inside the gearbox 400. An output shaft 101 of the engine 100 is in transmission connection with the first input end 401, and the first output end 403 is configured to provide power for the wheels 12. The first input end 401 is further in transmission connection with the second output end 404. An output shaft of the drive motor 200 is in transmission connection with the second input end 402, and the drive motor 200 is configured to transmit power to the second input end 402. In an axial direction of the engine 100, the drive motor 200 and the engine 100 are located on a same side of the gearbox 400. An input shaft 301 of the generator 300 is in transmission connection with the output shaft 101 of the engine 100.

The first input end 401 and the second input end 402 are ends at which power is input to the gearbox 400. In this embodiment, both the engine 100 and the drive motor 200 may provide the power to the gearbox 400, the first output end 403 is a power output end of the gearbox 400, and the power input from the first input end 401 and the second input end 402 is converted by the gearbox 400 and then output from the first output end 403. The first output end 403 is in transmission connection with the wheels 12, to drive the vehicle 1 to travel.

An input end of the generator 300 is in transmission connection with the second output end 404. In this embodiment, in the axial direction of the engine 100, the generator 300 is located on a side that is of the gearbox 400 and that is away from the engine 100.

The input shaft 301 of the generator 300 and the output shaft 101 of the engine 100 may be coaxially disposed, or may be disposed in parallel in a direction intersecting with the axial direction of the engine 100. In this embodiment, the input shaft 301 of the generator 300 and the output shaft 101 of the engine 100 are disposed in parallel along a second direction X. In this embodiment, the axial direction of the engine 100 is a first direction Y, where the second direction X intersects the first direction Y

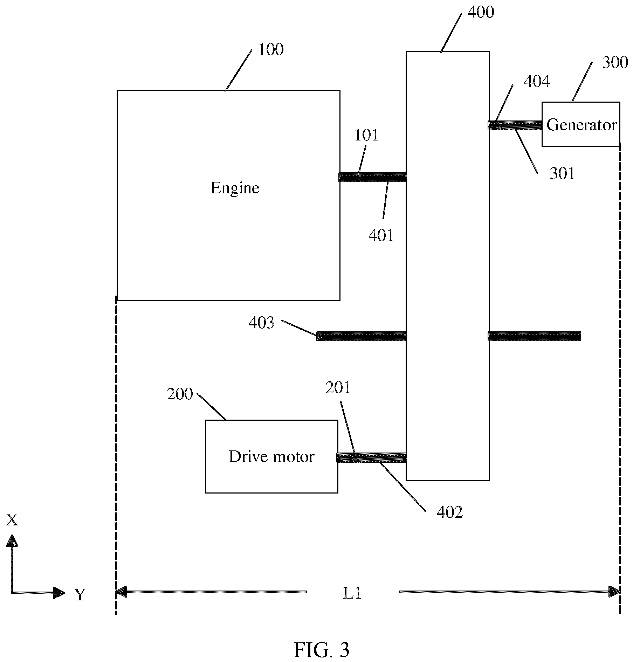

In this embodiment, the engine 100 includes the output shaft 101, and the axial direction of the engine 100 is an axial extension direction of the output shaft 101. The drive motor 200 and the engine 100 are located on the same side of the gearbox 400, so that a dimension of the hybrid power drive system 10 in the axial direction of the engine 100 can be reduced, and the hybrid power drive system 10 can be mounted in a position with a small dimension in the axial direction. In this embodiment, the axial direction of the engine 100 is the first direction Y, and the generator 300 is located on the side that is of the gearbox 400 and that is away from the engine 100. Generally, a dimension of the drive motor 200 in the first direction Y is less than a dimension of the engine 100 in the first direction Y The drive motor 200 and the engine 100 are disposed on the same side of the gearbox 400. A dimension of a side that is of the gearbox 400 and that is close to the engine 100 depends on a dimension of the engine 100, and the dimension of the drive motor 200 in the first direction Y does not affect the dimension of the hybrid power drive system 10 in the first direction Y As shown in FIG. 3, the dimension of the hybrid power drive system 10 in the first direction Y is a distance between the leftmost end of the engine 100 and the rightmost end of the generator 300, and this distance is a first distance L1.

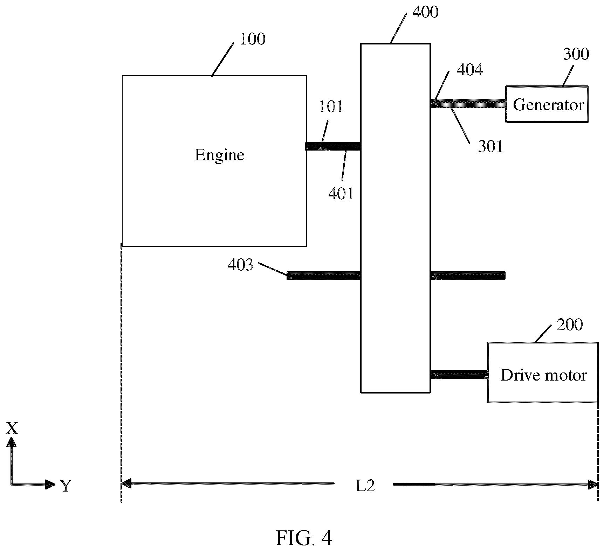

Refer to FIG. 4. If the drive motor 200 and the engine 100 are disposed on different sides of the gearbox 400, in other words, the drive motor 200 and the generator 300 are disposed on a same side, when a dimension of the generator 300 in the axial direction is less than a dimension of the drive motor 200 in the axial direction, the dimension of the hybrid power drive system 10 in the first direction Y is a distance between the leftmost end of the engine 100 and the rightmost end of the drive motor 200, and this distance is a second distance L2. To meet an overall appearance arrangement requirement or a transmission requirement, a transmission mechanism is disposed between the engine 100 and the generator 300, so that the drive motor 200 is aligned with a tail end of the generator 300. In this case, a distance between the leftmost end of the engine 100 and the rightmost end of the generator 300 is also the second distance L2. However, in this embodiment, when the engine 100 and the drive motor 200 are disposed on the same side, the transmission mechanism between the engine 100 and the generator 300 may be simplified, so that a dimension between the leftmost end of the engine 100 and the rightmost end of the generator 300 in the axial direction is reduced, and L1 is less than L2. That is, in this application, the drive motor 200 and the engine 100 are disposed on the same side of the gearbox 400, so that the dimension of the hybrid power drive system 10 in the first direction Y can be reduced. In some embodiments, when a space dimension in which the hybrid power drive system 10 can be mounted in the vehicle 1 is small, mounting is more convenient by using the hybrid power drive system 10 in this embodiment. In other words, the hybrid power drive system 10 in this application can reduce a dimension of the vehicle 1 in the first direction Y, so that another functional component can be mounted in the vehicle 1 in the first direction Y, to improve overall performance of the vehicle 1.

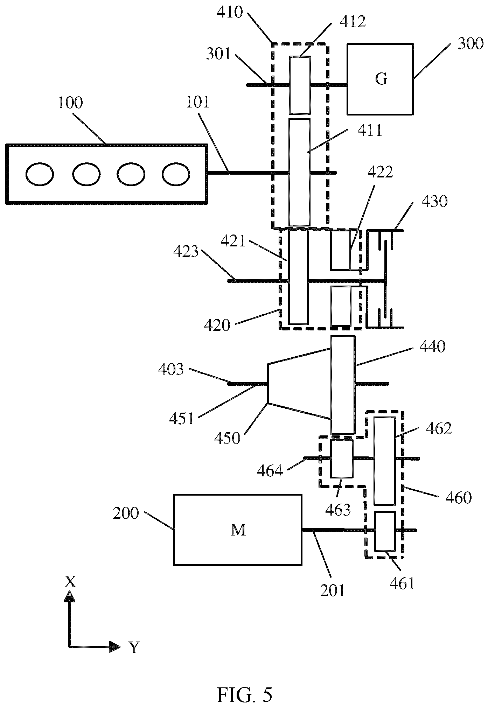

FIG. 5 is a schematic diagram of a structure of the hybrid power drive system 10 according to a first embodiment of this application. In a possible implementation, the gearbox 400 further includes a first gear transmission mechanism 410, and the first gear transmission mechanism 410 is located between the engine 100 and the generator 300. An input end of the first gear transmission mechanism 410 is the first input end 401, and an output end of the first gear transmission mechanism 410 is the second output end 404. The input end of the first gear transmission mechanism 410 is in transmission connection with the output shaft 101 of the engine 100, and the output end of the first gear transmission mechanism 410 is in transmission connection with an input shaft of the generator 300. In this embodiment, the output end 101 of the engine 100 is in transmission connection with the input shaft 301 of the generator 300 through the first gear transmission mechanism 410.

In a possible implementation, the first gear transmission mechanism 410 includes a first drive gear 411 and a first driven gear 412. The first drive gear 411 is mounted on the output end 101 of the engine 100, and the first driven gear 412 is mounted on the input shaft 301 of the generator 300. The first drive gear 411 is meshed with the first driven gear 412, and a transmission ratio of the first drive gear 411 to the first driven gear 412 is less than 1.

In this embodiment, the first gear transmission mechanism 410 is a speed increasing gear mechanism, and can optimize a workspace of the generator 300 when the generator 300 generates power, thereby improving power generation efficiency of the generator 300. For example, a quantity of gears of the first drive gear 411 is greater than a quantity of gears of the first driven gear 412. For example, a radius of the first drive gear 411 is greater than a radius of the first driven gear 412. In this embodiment, the first gear transmission mechanism 410 is a first-stage speed increasing gear, and the first-stage speed increasing gear can meet a speed increasing requirement and reduce a space dimension. In some implementations, when space of the hybrid power drive system 10 is large enough, the first gear transmission mechanism 410 may alternatively be a second-stage or higher-stage speed increasing gear. In some embodiments, the first gear transmission mechanism 410 may alternatively be a planetary gear.

In this embodiment, no clutch is disposed between the output end 101 of the engine 100 and the input shaft 301 of the generator 300. There is only one first drive gear 411 on the output shaft 101 of the engine 100, there is only one first driven gear 412 on the input shaft 301 of the generator 300, and there is only a dimension of one gear (the first drive gear 411 or the first driven gear 412) in the axial directions of the engine 100 and the generator 300, so that the dimensions of the engine 100 and the generator 300 in the axial direction are reduced. Further, the dimension of the hybrid power drive system 10 in the first direction Y is reduced. This enables the hybrid power drive system 10 to be more compact.

In this embodiment, the first gear transmission mechanism 410 includes the first drive gear 411 and the first driven gear 412. The first drive gear 411 is meshed with the first driven gear 412 to increase a distance between the output shaft 101 of the engine 100 and the input shaft 301 of the generator 300, so that the generator 300 can approach the first gear transmission mechanism 410 as close as possible, to reduce a dimension between the leftmost end of the engine 100 and the rightmost end of the generator 300 in the first direction Y

In a possible implementation, the gearbox 400 includes a second gear transmission mechanism 420 and a clutch 430, and the second gear transmission mechanism 420 is located between the first input end 401 and the clutch 430. An input end of the second gear transmission mechanism 420 is in transmission connection with the first input end 401. In this embodiment, the second gear transmission mechanism 420 is located between the first gear transmission mechanism 410 and the clutch 430, and the second gear transmission mechanism 420 is in transmission connection with the first input end 401 through the first gear transmission mechanism 410.

An output end of the second gear transmission mechanism 420 is in transmission connection with the first output end 403, and the clutch 430 is configured to connect the second gear transmission mechanism 420 to the first output end 403 or separate the second gear transmission mechanism 420 from the first output end 403. In this embodiment, that an output end of the second gear transmission mechanism 420 is in transmission connection with the first output end 403 means that the output end of the second gear transmission mechanism 420 and the first output end 403 are kept at a relative position at which the output end of the second gear transmission mechanism 420 can be in transmission connection with the first output end 403. When an active part of the clutch and a passive part of the clutch are combined, the second gear transmission mechanism 420 can drive the first output end 403 to move.

The clutch 430 is a friction clutch. The clutch 430 includes an input end and an output end. The input end and the output end are closely attached and relatively fastened under a condition of applying pressure, and the input end is separated from the output end when the pressure is canceled. When the clutch 430 is connected to the second gear transmission mechanism 420 and the first output end 403, the second gear transmission mechanism 420 can drive the first output end 403 to move. When the clutch 430 separates the second gear transmission mechanism 420 from the first output end 403, the second gear transmission mechanism 420 cannot drive the first output end 403 to move.

In this embodiment, the clutch 430 is located on a side that is of the second gear transmission mechanism 420 and that is away from the engine 100, so that a dimension of the output shaft 101 of the engine 100 in the first direction Y can be reduced. A radial dimension of the engine 100 is large. Therefore, if the clutch 430 is disposed on a side that is of the second gear transmission mechanism 420 and that faces the engine 100, the output shaft 101 of the engine 100 needs to be extended, so that the clutch 430 can be placed between the engine 100 and the second gear transmission mechanism 420. However, if the output shaft 101 of the engine 100 is extended, it is not conducive to shortening the dimension of the hybrid power drive system 10 in the first direction Y

In this embodiment, the second gear transmission mechanism 420 includes a first intermediate shaft 423, and the clutch 430 is mounted on the first intermediate shaft 423. The first intermediate shaft 423 and the output shaft 101 of the engine 100 are arranged in a direction intersecting with an axial direction of the first intermediate shaft 423. The clutch 430 is mounted on the first intermediate shaft 423 of the second gear transmission mechanism 420 instead of on the output shaft 101 of the engine 100. In this way, the dimension of the output shaft 101 of the engine 100 in the axial direction is shortened because a dimension of the engine 100 in the axial direction is not occupied.

In a possible implementation, connection lines between the output shaft 101 of the engine 100, the input shaft of the generator 300, and the first intermediate shaft 423 form a triangle, to fully reduce an occupied spatial position and reduce space.

In a possible implementation, the second gear transmission mechanism 420 includes a second driven gear 421 and a second drive gear 422 that are mounted on the first intermediate shaft 423. An input end of the second driven gear 421 is in transmission connection with the first input end 401, and the second driven gear 421 is fastened to the first intermediate shaft 423. The first intermediate shaft 423 is fastened to the input end of the clutch 430, and the output end of the clutch 430 is fastened to the second drive gear 422. The second drive gear 422 is in transmission connection with the first output end 403. In this embodiment, the input end of the second driven gear 421 is in transmission connection with the first input end 401 through the first gear transmission mechanism 410. Specifically, the second driven gear 421 is meshed with the first drive gear 411 to implement a transmission connection between the second driven gear 421 and the first drive gear 411. The second driven gear 421 is sleeved on and fastened to the first intermediate shaft 423, and the second driven gear 421 can drive the first intermediate shaft 423 to rotate when rotating.

In this embodiment, the second drive gear 422 is located between the second driven gear 421 and the clutch 430 in the axial direction of the first intermediate shaft 423. The second drive gear 422 may be sleeved on the first intermediate shaft 423 through a shaft bearing and can rotate relative to the first intermediate shaft 423. An output end of the second drive gear 422 is configured to mesh with another gear structure, for example, a common driven gear 440 in FIG. 5. To be specific, there are other gears on a side that is of the second drive gear 422 and that is away from the generator 300, for example, the common driven gear 440 and a third gear transmission mechanism 460 in FIG. 5. If the second drive gear 422 is disposed on an outer side of the clutch 430, for example, the right side in FIG. 5, other gears meshed with the second drive gear 422, for example, the common driven gear 440 and the third gear transmission mechanism 460, need to move toward the right side at a dimension of the clutch 430 in the first direction Y, so that a dimension of the gearbox 400 in the first direction Y lengthens. In this embodiment, disposing the second drive gear 422 between the second driven gear 421 and the clutch 430 facilitates reducing the dimension of the gearbox 400 in the first direction Y In this way, the hybrid power drive system 10 is more compact and has a smaller volume.

In this embodiment, a transmission ratio of the first drive gear 411 to the second driven gear 421 is greater than 1, so that speed reduction is performed when power is transferred to the second driven gear 421, in other words, the second gear transmission mechanism 420 is a speed reducing gear. For example, the quantity of gears of the first drive gear 411 is less than a quantity of gears of the second driven gear 421. For example, the radius of the first drive gear 411 is less than a radius of the second driven gear 421.

In a possible implementation, the generator 300 and the clutch 430 at least partially overlap in an axial direction of the clutch 430. The generator 300 is enabled to be closer to the first gear transmission mechanism 410, so that the dimension between the leftmost end of the engine 100 and the rightmost end of the generator 300 is smaller. In this embodiment, the first gear transmission mechanism 410 includes the first drive gear 411 and the first driven gear 412 that are arranged and meshed in the direction intersecting with the first direction Y, so that space on a side that is of the first gear transmission mechanism 410 and that faces the generator 300 has a large dimension, and the generator 300 may be disposed closer to the first gear transmission mechanism 410. The generator 300 and the clutch 430 overlap at least partially in the axial direction of the clutch 430. Space above the clutch 430 in FIG. 5 may be fully utilized, so that the hybrid power drive system 10 has a more compact structure and the smaller volume.

In a possible implementation, the gearbox 400 further includes the common driven gear 440 and a differential 450. The common driven gear 440 is in transmission connection with the output end of the clutch 430, and the differential 450 and the common driven gear 440 are coaxially disposed. An output end of the differential 450 is the first output end 403, and the output end of the differential 450 is configured to provide power for the wheels 12. The differential 450 is a mechanism that can make the left and right (or front and rear) wheels rotate at different speeds. The gearbox 400 further includes a differential output shaft 451. The common driven gear 440 and the differential 450 are coaxially disposed on the differential output shaft 451, and the common driven gear 440 is fastened to the differential output shaft 451, to transmit power of the common driven gear 440 to the differential output shaft 451. Two ends of the differential output shaft 451 are connected to two wheels 12, to drive the wheels to rotate. The two ends of the differential output shaft 451 are output ends of the differential 450, and are also first output ends 403. The common driven gear 440 is further in transmission connection with an input end of the drive motor 200. In some modes, the common driven gear 440 is in transmission connection with the drive motor 200, and the drive motor 200 provides the power for the differential 450. In some modes, the common driven gear 440 is in transmission connection with the engine 100, and the engine 100 provides the power for the differential 450.

In this embodiment, the common driven gear 440 is in transmission connection with the output end of the clutch 430 through the second drive gear 422. A transmission ratio of the second drive gear 422 to the common driven gear 440 is less than 1, so that speed reduction is performed when power is transferred to the common driven gear 440, in other words, the second gear transmission mechanism 420 is a second-stage speed reducing gear. For example, a quantity of gears of the second drive gear 422 is less than a quantity of gears of the common driven gear 440. For example, a radius of the second drive gear 422 is less than a radius of the common driven gear 440. In this embodiment, the second-stage speed reducing gear can meet a speed reducing requirement and reduce the space dimension. In some implementations, when the space of the hybrid power drive system 10 is large enough, the second gear transmission mechanism 420 may alternatively be a third-stage or higher-stage speed reducing gear.

In this embodiment, the differential 450 is disposed on a side that is of the common driven gear 440 and that faces the engine 100. The common driven gear 440 is meshed with the second drive gear 422, and is aligned with the second drive gear 422 in the direction intersecting with the first direction Y The differential 450 and the second driven gear 421 are arranged in the direction intersecting with the first direction Y This can fully use space in the gearbox 400, and enable a structure of the gearbox 400 to be more compact.

In a possible implementation, the gearbox 400 further includes the third gear transmission mechanism 460, and the third gear transmission mechanism 460 is located between the common driven gear 440 and the drive motor 200. An input end of the third gear transmission mechanism 460 is the second input end 402, and an output end of the third gear transmission mechanism 460 is in transmission connection with the common driven gear 440. Driving force of the drive motor 200 is transferred to the common driven gear 440 through the third gear transmission mechanism 460.

In this embodiment, the third gear transmission mechanism 460 includes a first-stage drive gear 461, a first-stage driven gear 462, a second-stage drive gear 463, and a second intermediate shaft 464. The first-stage drive gear 461 and the output shaft 201 of the drive motor 200 are coaxially disposed, and are fastened to each other. Rotation of the output shaft 201 of the drive motor 200 drives the first-stage drive gear 461 to rotate. The first-stage drive gear 461 is meshed with the first-stage driven gear 462, and a transmission ratio of the first-stage drive gear 461 to the first-stage driven gear 462 is greater than 1, in other words, the third gear transmission mechanism 460 is a speed reducing gear. For example, a quantity of gears of the first-stage drive gear 461 is less than a quantity of gears of the first-stage driven gear 462. For example, a radius of the first-stage drive gear 461 is less than a radius of the first-stage driven gear 462.

The first-stage driven gear 462 and the second-stage drive gear 463 are sleeved on and fastened to the second intermediate shaft 464, and the second-stage drive gear 463 is meshed with the common driven gear 440, so that the input end of the third gear transmission mechanism 460 is in transmission connection with the common driven gear 440. A transmission ratio of the second-stage drive gear 463 to the common driven gear 440 is greater than 1, so that the third gear transmission mechanism 460 is the second-stage speed reducing gear. In this embodiment, the second-stage speed reducing gear can meet the speed reducing requirement and reduce the space dimension. In some implementations, when the space of the hybrid power drive system 10 is large enough, the third gear transmission mechanism 460 may alternatively be the third-stage or higher-stage speed reducing gear.

In a possible implementation, the first-stage driven gear 462 is disposed on a side that is of the second-stage drive gear 463 and that is away from the engine 100, so that the first-stage driven gear 462 and the clutch 430 are arranged in the direction intersecting with the first direction Y This can fully use space in the gearbox 400, and enable a structure of the gearbox 400 to be more compact. In addition, space on a side that is of the third gear transmission mechanism 460 and that faces the engine 100 is reserved for accommodating at least a part of the drive motor 200.

In a possible implementation, the drive motor 200 and the differential 450 at least partially overlap in an axial direction of the drive motor 200. The drive motor 200 is disposed on a side that is of the third gear transmission mechanism 460 and that faces the engine 100, and the drive motor 200 and the differential 450 at least partially overlap in the first direction Y, so that the drive motor 200 is closer to the gearbox 400. In this way, the hybrid power drive system 10 has the more compact structure and the smaller volume.

In a possible implementation, connection lines between the output shaft 101 of the engine 100, the output shaft 201 of the drive motor 200, and the input shaft 301 of the generator 300 form a triangle. This also reduces a spatial layout volume and reduces space.

In another implementation, the output shaft 101 of the engine 100, the output shaft 201 of the drive motor 200, the input shaft 301 of the generator 300, and a shaft in the gearbox 400 may be disposed based on a requirement, to reduce a volume of the hybrid power drive system 10.

In a possible implementation, the hybrid power drive system 10 further includes a housing (not shown in the figure), and the engine 100, the drive motor 200, the generator 300, and the gearbox 400 are located in the housing. In an implementation, a housing of at least one of the engine 100, the drive motor 200, the generator 300, and the gearbox 400 may be a separate housing. In an implementation, housings of at least two of the engine 100, the drive motor 200, the generator 300, and the gearbox 400 are an integrated housing. This may be specifically disposed based on a requirement. This is not limited in this application.

In a possible implementation, the engine 100, the drive motor 200, the generator 300, and the gearbox 400 are integrated into an integrated structure, to reduce the volume.

In a possible implementation, the engine 100, the drive motor 200, the generator 300, the gearbox 400, and the controller 600 are integrated into an integrated structure, to reduce the volume.

In a possible implementation, the hybrid power drive system 10 may include only the engine 100, the drive motor 200, the generator 300, and the gearbox 400, and may be connected to the controller 600 and the power battery 500 through a cable or a connector.

In a possible implementation, a vehicle-mounted charger or another vehicle-mounted functional component may be further integrated into the hybrid power drive system 10, to reduce occupied internal space of the vehicle 1.

The following further describes five working modes of the vehicle 1 based on the structure of the hybrid power drive system 10.

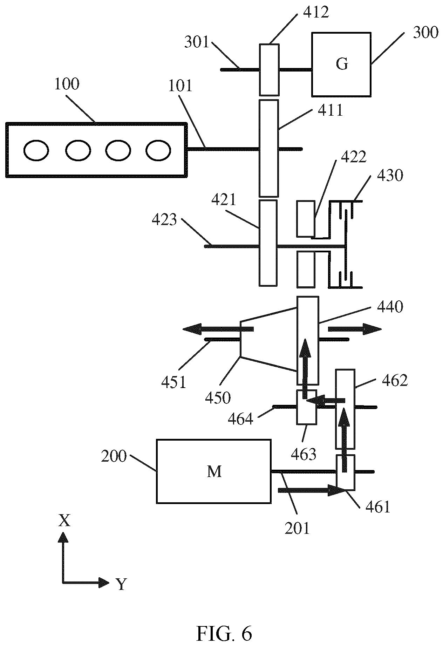

With reference to FIG. 2 and FIG. 6, when a battery level of the power battery 500 is sufficient or when the vehicle 1 is in a low-speed working condition, the vehicle 1 is in a pure electric drive mode shown in FIG. 6 (an arrow in the figure is a power output direction). The controller 600 controls the engine 100 and the generator 300 not to work, and the input end is separated from the output end of the clutch 430, so that power transfer of the first drive gear 411 and the first driven gear 412 is interrupted. The power battery 500 supplies power to the drive motor 200. The drive motor 200 transmits the power to the differential 450 by sequentially using the first-stage drive gear 461, the first-stage driven gear 462, the second-stage drive gear 463, and the common driven gear 440, to drive the wheels 12 of the vehicle 1 to rotate. In this case, the vehicle 1 runs only when driven by the drive motor 200.

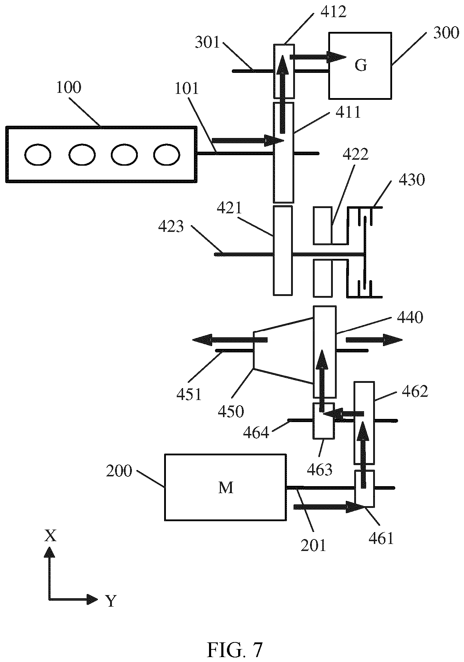

With reference to FIG. 2 and FIG. 7, when a battery level of the power battery 500 is insufficient, the vehicle 1 is in a serial extended range mode shown in FIG. 7 (an arrow in the figure is a power output direction). The controller 600 controls both the engine 100 and the generator 300 to work, and the input end is separated from the output end of the clutch 430, so that power transfer of the second driven gear 421 and the second drive gear 422 is interrupted. The engine 100 may drive, by sequentially using the first drive gear 411 and the first driven gear 412, a rotor of the generator 300 to rotate to generate electricity, and the electricity generated by the generator 300 may be stored in the power battery 500. The power battery 500 supplies power to the drive motor 200. The drive motor 200 may transmit the power to the differential 450 by sequentially using the first-stage drive gear 461, the first-stage driven gear 462, the second-stage drive gear 463, and the common driven gear 440, to drive the wheels 12 of the vehicle 1 to rotate.

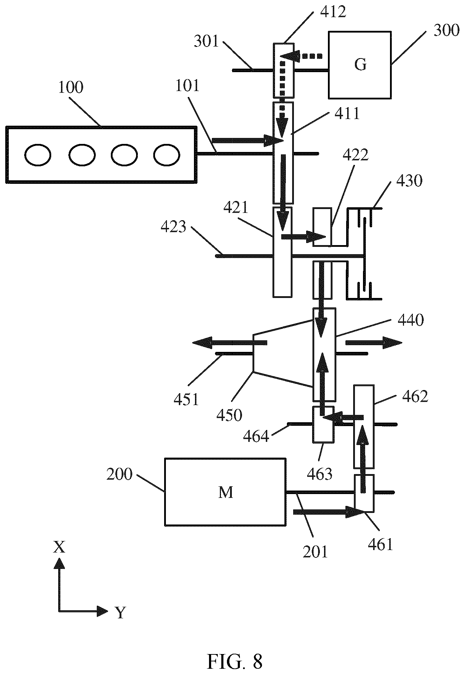

With reference to FIG. 2 and FIG. 8, when a battery level of the power battery 500 is sufficient and a power requirement of the vehicle 1 is high (for example, a working condition in which rapid acceleration is required), the vehicle 1 is in a parallel drive mode shown in FIG. 8 (a solid arrow in the figure is a power output direction). The controller 600 may control both the engine 100 and the drive motor 200 to work, and the input end and the output end of the clutch 430 are connected, so that power of the second driven gear 421 can be transferred to the second drive gear 422, the clutch 430 is connected to the output shaft 101 of the engine 100 and the common driven gear 440, and the generator 300 does not work. The engine 100 may drive the differential 450 to run by sequentially using the first drive gear 411, the second driven gear 421, the second drive gear 422, and the common driven gear 440, and the power battery 500 supplies power to the drive motor 200. The drive motor 200 drives the differential 450 to run by sequentially using the first-stage drive gear 461, the first-stage driven gear 462, the second-stage drive gear 463, and the common driven gear 440. It should be noted that, in this case, a rotational speed of the second drive gear 422 is the same as a rotational speed of the two-stage drive gear 463.

It should be noted that, when the power requirement of the vehicle 1 is very high, the controller may control the engine 100, the generator 300, and the drive motor 200 to work. The clutch 430 is connected to the output shaft 101 of the engine 100 and the common driven gear 440. In this case, the generator 300 is used as a motor, the generator 300 may drive the second drive gear 422 to rotate by sequentially using the first driven gear 412, the first drive gear 411, and second driven gear 421 (as shown by a dashed arrow in FIG. 8). At the same time, the engine 100 may drive the first drive gear 411 and the second driven gear 421 to rotate, that is, power of the generator 300 and the power of the engine 100 are coupled at the first drive gear 411. A rotational speed of the first drive gear 411 is the same as a rotational speed of the first driven gear 412. Then, the power is transmitted by using the second driven gear 421, the second drive gear 422, and the common driven gear 440 to drive the differential 450 to run. The drive motor 200 drives the differential 450 to run by sequentially using the first-stage drive gear 461, the first-stage driven gear 462, the second-stage drive gear 463, and the common driven gear 440.

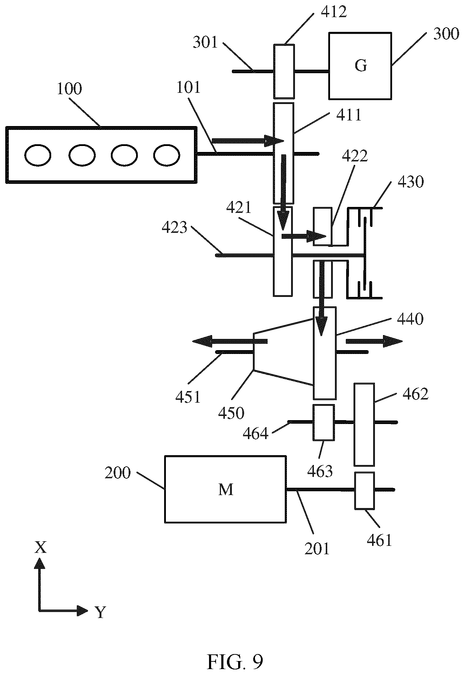

With reference to FIG. 2 and FIG. 9, when a battery level of the power battery 500 is insufficient, and in a working condition in which direct drive efficiency of some engines 100 is higher than efficiency of simultaneously driving by the engine 100 and the drive motor 200 in the serial extended range mode, the vehicle 1 is in an engine direct drive mode shown in FIG. 9 (an arrow in the figure is a power output direction). The controller 600 may control the engine 100 to work, and the input end and the output end of the clutch 430 are connected, so that power of the second driven gear 421 can be transferred to the second drive gear 422, the clutch 430 is connected to the output shaft 101 of the engine 100 and the common driven gear 440, and neither the generator 300 nor the drive motor 200 works. The engine 100 may drive the differential 450 to run by sequentially using the first drive gear 411, the second driven gear 421, the second drive gear 422, and the common driven gear 440. In addition, when efficiency of the engine 100 is high and the battery level of the power battery 500 is not fully charged, the controller 600 may control both the engine 100 and the generator 300 to work, the clutch 430 is connected to the output shaft 101 of the engine 100 and the common driven gear 440, and the drive motor 200 does not work. In addition to driving the differential 450 to run, the engine 100 may further drive, by sequentially using the first drive gear 411 and the first driven gear 412, a rotor of the generator 300 to rotate to generate electricity, and the electricity generated by the generator 300 may be stored in the power battery 500.

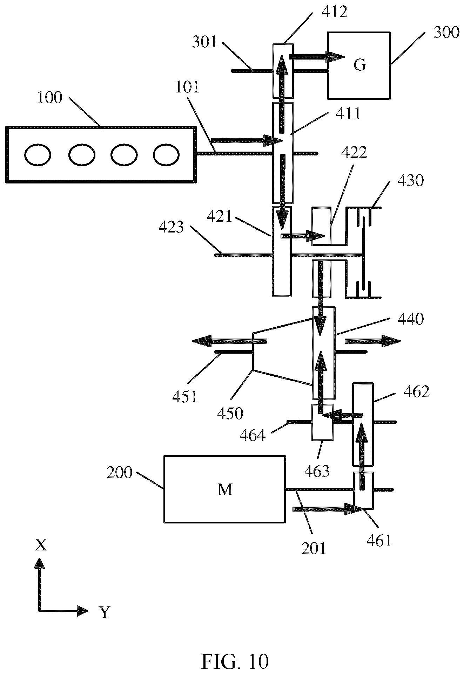

With reference to FIG. 2 and FIG. 10, when a battery level of the power battery 500 is insufficient and a power requirement of the vehicle 1 is high (for example, a working condition in which rapid acceleration is required), the vehicle 1 is in a combined drive mode shown in FIG. 10 (an arrow in the figure is a power output direction). The controller 600 may control the engine 100, the generator 300, and the drive motor 200 to work, and the input end and the output end of the clutch 430 are connected, so that power of the second driven gear 421 can be transferred to the second drive gear 422, and the clutch 430 is connected to the output shaft 101 of the engine 100 and the common driven gear 440. The engine 100 may drive, by sequentially using the first drive gear 411 and the first driven gear 412, a rotor of the generator 300 to rotate to generate electricity, and the electricity generated by the generator 300 may be stored in the power battery 500. The power battery 500 supplies power to the drive motor 200. The drive motor 200 also drives the differential 450 to run by sequentially using the first-stage drive gear 461, the first-stage driven gear 462, the second-stage drive gear 463, and the common driven gear 440. In addition, the engine 100 may further drive the differential 450 to run by sequentially using the first drive gear 411, the second driven gear 421, the second drive gear 422, and the common driven gear 440.

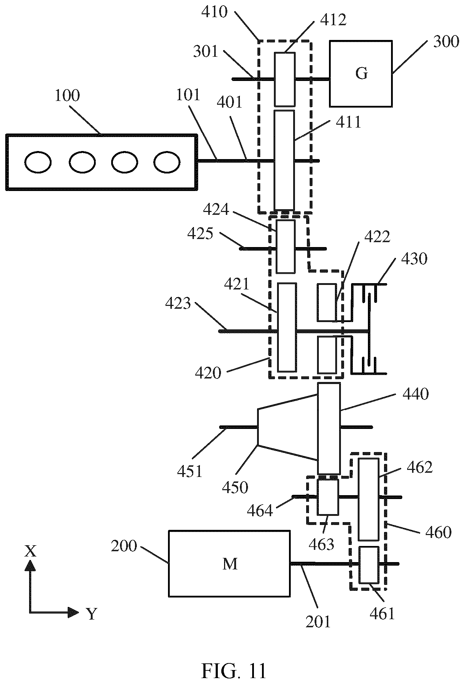

FIG. 11 is a schematic diagram of a structure of a hybrid power drive system 10 according to a second embodiment of this application. Different from the first embodiment, in the second embodiment, a second gear transmission mechanism 420 further includes a first idler gear 424. The first idler gear 424 is mounted between a first input end 401 and a second driven gear 421, and the first input end 401, the first idler gear 424, and the second driven gear 421 are arranged in a direction intersecting with an axial direction of an engine 100. In this embodiment, the first idler gear 424 may change a rotation direction input by the second driven gear 421, so that a rotation direction of a differential output shaft 451 is changed. The gearbox may be applicable to different application scenarios, and may adapt to a case in which an exhaust pipe is disposed in front of the engine 100. For example, in the first embodiment, the exhaust pipe is disposed at the rear of the engine 100. When a rotation direction of the output shaft 101 of the engine 100 is a clockwise direction, the rotation direction of the differential output shaft 451 is the same as a forward direction. In the second implementation, the exhaust pipe is disposed in front of the engine 100. When a rotation direction of an output shaft 101 of the engine 100 is a counterclockwise direction, the rotation direction input by the second driven gear 421 may be enabled by using the first idler gear 424 to be the same as the rotation direction input by the second driven gear 421 in the first implementation, to ensure that the rotation direction of the differential output shaft 451 is the same as the forward direction.

In this embodiment, the first idler gear 424 may further increase a distance between a first intermediate shaft 423 and the output shaft 101 of the engine 100, so that a side that is of a gearbox 400 and that faces the engine 100 has large space. This helps place a drive motor 200 and the engine 100 on a same side.

In this embodiment, the second gear transmission mechanism 420 further includes a third intermediate shaft 425, and the first idler gear 424 is mounted on the third intermediate shaft 425. The third intermediate shaft 425 may also be referred to as a first idler gear shaft.

In this embodiment, the output shaft 101 of the engine 100 and a first drive gear 411 are coaxially disposed. Rotation of the output shaft 101 can drive the first drive gear 411 to rotate. The first drive gear 411 is meshed with a first driven gear 412, and the first drive gear 411 generates electricity for a generator 300 through the first driven gear 412. The first drive gear 411 is meshed with the first idler gear 424, and the first idler gear 424 is meshed with the second driven gear 421. The second driven gear 421 and a second drive gear 422 are mounted on the first intermediate shaft 423. The first intermediate shaft 423 is fastened to an input end of a clutch 430, and an output end of the clutch 430 is fastened to the second drive gear 422. The second drive gear 422 is located between the second driven gear 421 and the clutch 430. A common driven gear 440 and a differential 450 are mounted on the differential output shaft 451, and the common driven gear 440 is meshed with the second drive gear 422. A first-stage drive gear 461 and an output shaft 201 of the drive motor 200 are coaxially disposed, and a first-stage driven gear 462 and a second-stage drive gear 463 are sleeved on and fastened to a second intermediate shaft 464. The first-stage drive gear 461 is meshed with the first-stage driven gear 462, and the second-stage drive gear 463 is meshed with the common driven gear 440.

In this embodiment, a first gear transmission mechanism 410 is a first-stage speed increasing gear mechanism, and the second gear transmission mechanism 420 and a third gear transmission mechanism 460 are speed reducing gear mechanisms.

In this embodiment, power output by the engine 100 is transferred to the differential 450 by sequentially using the first drive gear 411, the first idler gear 424, the second driven gear 421, the clutch 430 in a connected state, the second drive gear 422, and the common driven gear 440, and the differential 450 transfers the power to wheels 12 to drive the wheels 12 to run. The power output by the engine 100 may further be transferred to the generator 300 by sequentially using the first drive gear 411 and the first driven gear 412, to generate electricity.

In this embodiment, when the generator 300 is used as an engine, power output by the generator 300 is transferred to the differential 450 by sequentially using the first driven gear 412, the first drive gear 411, the first idler gear 424, the second driven gear 421, the clutch 430 in the connected state, the second drive gear 422, and the common driven gear 440, and the differential 450 transfers the power to the wheels 12 to drive the wheels 12 to run.

In this embodiment, power output by the drive motor 200 also drives the differential 450 to run by sequentially using the first-stage drive gear 461, the first-stage driven gear 462, the second-stage drive gear 463, and the common driven gear 440.

It should be noted that, possible implementations, position relationships, and structure descriptions of the engine 100, the generator 300, the drive motor 200, the power battery 500, and the controller 600 in the first embodiment are applicable to possible implementations, position relationships, and structure descriptions of the engine 100, the generator 300, the drive motor 200, a power battery 500, and a controller 600 in the second embodiment. Possible implementations, position relationships, and structure descriptions of the first gear transmission mechanism 410, the third gear transmission mechanism 460, the clutch 430, the common driven gear 440, and the differential 450 in the gearbox 400 in the first embodiment are applicable to possible implementations, position relationships, and structures of the first gear transmission mechanism 410, the third gear transmission mechanism 460, the clutch 430, the common driven gear 440, and the differential 450 in the second embodiment. Descriptions of the second driven gear 421 and the second drive gear 422 in the second gear transmission mechanism 420 in the first embodiment are also applicable to descriptions of the second driven gear 421 and the second drive gear 422 in the second gear transmission mechanism 420 in the second embodiment. The hybrid power drive system 10 in the second embodiment can also implement the five working modes of the hybrid power drive system in the first embodiment. Details are not described herein again.

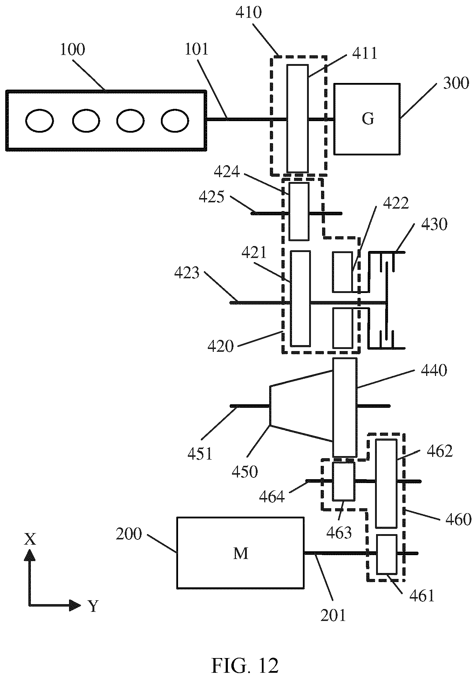

FIG. 12 is a schematic diagram of a structure of a hybrid power drive system 10 according to a third embodiment of this application. Different from the second embodiment, in the third embodiment, a first gear transmission mechanism 410 includes only a first drive gear 411, and there is no first driven gear 412. Specifically, in this embodiment, the first gear transmission mechanism 410 includes the first drive gear 411, and the first drive gear 411 is mounted between an engine 100 and a generator 300. In an axial direction of the engine 100, the engine 100, the first drive gear 411, and the generator 300 are sequentially arranged. In this embodiment, no speed increasing gear is disposed between the engine 100 and the generator 300, and this may be applicable to an application scenario in which no speed increasing is required. In this embodiment, there is a first idler gear 424, and the first idler gear 424 is meshed between the first drive gear 411 and a second driven gear 421. The first idler gear 424 may change a rotation direction input by the second driven gear 421, so that a rotation direction of a differential output shaft 451 is changed. The gearbox may be applicable to different application scenarios, and may adapt to a case in which an exhaust pipe is disposed in front of the engine 100. The first idler gear 424 may further increase a distance between a first intermediate shaft 423 and an output shaft 101 of the engine 100, so that a side that is of a gearbox 400 and that faces the engine 100 has large space. This helps place a drive motor 200 and the engine 100 on a same side. In this embodiment, the first idler gear 424 is disposed, so that a distance between a third intermediate shaft 425 and the output shaft 101 of the engine 100 may be increased, and the generator 300 can be disposed close to the first drive gear 411. This reduces dimensions of the engine 100 and the generator 300 in a first direction Y

In this embodiment, the output shaft 101 of the engine 100 and the first drive gear 411 and the generator 300 are coaxially disposed. Rotation of the output shaft 101 can drive the first drive gear 411 to rotate. The engine 100 provides power for the generator 300 to generate electricity. The first drive gear 411 is meshed with the first idler gear 424, and the first idler gear 424 is meshed with the second driven gear 421. The second driven gear 421 and a second drive gear 422 are mounted on the first intermediate shaft 423. The first intermediate shaft 423 is fastened to an input end of a clutch 430, and an output end of the clutch 430 is fastened to the second drive gear 422. The second drive gear 422 is located between a first driven gear 421 and the clutch 430. A common driven gear 440 and a differential 450 are mounted on the differential output shaft 451, and the common driven gear 440 is meshed with the second drive gear 422. A first-stage drive gear 461 and an output shaft 201 of the drive motor 200 are coaxially disposed, and a first-stage driven gear 462 and a second-stage drive gear 463 are sleeved on and fastened to a second intermediate shaft 464. The first-stage drive gear 461 is meshed with the first-stage driven gear 462, and the second-stage drive gear 463 is meshed with the common driven gear 440.

In this embodiment, a second gear transmission mechanism 420 and a third gear transmission mechanism 460 are speed reducing gear mechanisms.

In this embodiment, power output by the engine 100 is transferred to the differential 450 by sequentially using the first drive gear 411, the first idler gear 424, the second driven gear 421, the clutch 430 in a connected state, the second drive gear 422, and the common driven gear 440, and the differential 450 transfers the power to wheels 12 to drive the wheels 12 to run. The power output by the engine 100 may further be transferred to the generator 300 by sequentially using the first drive gear 411, to generate the electricity.

In this embodiment, when the generator 300 is used as an engine, power output by the generator 300 is transferred to the differential 450 by sequentially using the first drive gear 411, the first idler gear 424, the second driven gear 421, the clutch 430 in the connected state, the second drive gear 422, and the common driven gear 440, and the differential 450 transfers the power to the wheels 12 to drive the wheels 12 to run. When the engine 100 and the generator 300 drive together, rotational speeds of the engine 100 and the generator 300 are the same, so that the power output by the engine 100 and the power output by the generator 300 are coupled on the first drive gear 411.

In this embodiment, power output by the drive motor 200 also drives the differential 450 to run by sequentially using the first-stage drive gear 461, the first-stage driven gear 462, the second-stage drive gear 463, and the common driven gear 440.

It should be noted that, possible implementations, position relationships, and structure descriptions of the engine 100, the generator 300, the drive motor 200, the power battery 500, and the controller 600 in the first embodiment or the second embodiment are applicable to possible implementations, position relationships, and structure descriptions of the engine 100, the generator 300, the drive motor 200, a power battery 500, and a controller 600 in the third embodiment. Possible implementations, position relationships, and structure descriptions of the second gear transmission mechanism 420, the third gear transmission mechanism 460, the clutch 430, the common driven gear 440, and the differential 450 in the gearbox 400 in the second embodiment are applicable to possible implementations, position relationships, and structures of the second gear transmission mechanism 420, the third gear transmission mechanism 460, the clutch 430, the common driven gear 440, and the differential 450 in the third embodiment. The hybrid power drive system 10 in the third embodiment can also implement the five working modes of the hybrid power drive system in the first embodiment. Details are not described herein again.

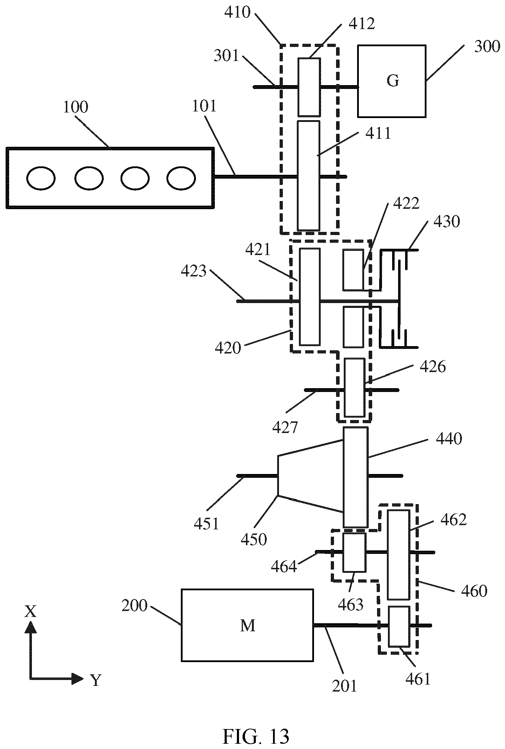

FIG. 13 is a schematic diagram of a structure of a hybrid power drive system 10 according to a fourth embodiment of this application. Different from the first embodiment, in the fourth embodiment, a second gear transmission mechanism 420 further includes a second idler gear 426.

Specifically, in this embodiment, the second gear transmission mechanism 420 further includes the second idler gear 426, and the second idler gear 426 is mounted between a clutch 430 and a common driven gear 440. The second idler gear 426 is meshed with an output end of the clutch 430 and the common driven gear 440. In this embodiment, the second idler gear 426 is meshed between a second drive gear 422 and the common driven gear 440. The second idler gear 426 is disposed, so that a rotation direction output by a second driven gear 421 may be changed, and a rotation direction of a differential output shaft 451 is changed. The gearbox may be applicable to different application scenarios, and may adapt to a case in which an exhaust pipe is disposed in front of an engine 100. The second idler gear 426 may further increase a distance between the differential output shaft 451 and an output shaft 101 of the engine 100, so that a side that is of a gearbox 400 and that faces the engine 100 has large space. This helps place a drive motor 200 and the engine 100 on a same side.

In this embodiment, the second gear transmission mechanism 420 further includes a fourth intermediate shaft 427, and the second idler gear 426 is mounted on the fourth intermediate shaft 427. The fourth intermediate shaft 427 may also be referred to as a second idler gear shaft.

In this embodiment, the output shaft 101 of the engine 100 and a first drive gear 411 are coaxially disposed. Rotation of the output shaft 101 can drive the first drive gear 411 to rotate. The first drive gear 411 is meshed with a first driven gear 412, and the first drive gear 411 generates electricity for a generator 300 through the first driven gear 412. The first drive gear 411 is meshed with the second driven gear 421. The second driven gear 421 and the second drive gear 422 are mounted on a first intermediate shaft 423. The first intermediate shaft 423 is fastened to an input end of the clutch 430, and the output end of the clutch 430 is fastened to the second drive gear 422. The second drive gear 422 is located between the second driven gear 421 and the clutch 430. The common driven gear 440 and a differential 450 are mounted on the differential output shaft 451, and the second idler gear 426 is meshed between the second drive gear 422 and the common driven gear 440. A first-stage drive gear 461 and an output shaft 201 of the drive motor 200 are coaxially disposed, and a first-stage driven gear 462 and a second-stage drive gear 463 are sleeved on and fastened to a second intermediate shaft 464. The first-stage drive gear 461 is meshed with the first-stage driven gear 462, and the second-stage drive gear 463 is meshed with the common driven gear 440.

In this embodiment, a first gear transmission mechanism 410 is a first-stage speed increasing gear mechanism, and the second gear transmission mechanism 420 and a third gear transmission mechanism 460 are speed reducing gear mechanisms.

In this embodiment, power output by the engine 100 is transferred to the differential 450 by sequentially using the first drive gear 411, the second driven gear 421, the clutch 430 in a connected state, the second drive gear 422, the second idler gear 426, and the common driven gear 440, and the differential 450 transfers the power to wheels 12 to drive the wheels 12 to run.

In this embodiment, when the generator 300 is used as an engine, power output by the generator 300 is transferred to the differential 450 by sequentially using the first driven gear 412, the first drive gear 411, the second driven gear 421, the clutch 430 in the connected state, the second drive gear 422, the second idler gear 426, and the common driven gear 440, and the differential 450 transfers the power to the wheels 12 to drive the wheels 12 to run.

In this embodiment, power output by the drive motor 200 also drives the differential 450 to run by sequentially using the first-stage drive gear 461, the first-stage driven gear 462, the second-stage drive gear 463, and the common driven gear 440.

It should be noted that, possible implementations, position relationships, and structure descriptions of the engine 100, the generator 300, the drive motor 200, the power battery 500, and the controller 600 in the first embodiment are applicable to possible implementations, position relationships, and structure descriptions of the engine 100, the generator 300, the drive motor 200, a power battery 500, and a controller 600 in the fourth embodiment. Possible implementations, position relationships, and structure descriptions of the first gear transmission mechanism 410, the third gear transmission mechanism 460, the clutch 430, the common driven gear 440, and the differential 450 in the gearbox 400 in the first embodiment are applicable to possible implementations, position relationships, and structures of the first gear transmission mechanism 410, the third gear transmission mechanism 460, the clutch 430, the common driven gear 440, and the differential 450 in the fourth embodiment. Descriptions of the second driven gear 421 and the second drive gear 422 in the second gear transmission mechanism 420 in the first embodiment are also applicable to descriptions of the second driven gear 421 and the second drive gear 422 in the second gear transmission mechanism 420 in the fourth embodiment. The hybrid power drive system 10 in the fourth embodiment can also implement the five working modes of the hybrid power drive system in the first embodiment. Details are not described herein again.

In some embodiments, the second idler gear 426 may alternatively be disposed in the second embodiment and the third embodiment, to increase a distance between the differential output shaft 451 and the output shaft 101 of the engine 100, so that a side that is of the gearbox 400 and that faces the engine 100 has large space. This helps place the drive motor 200 and the engine 100 on a same side.

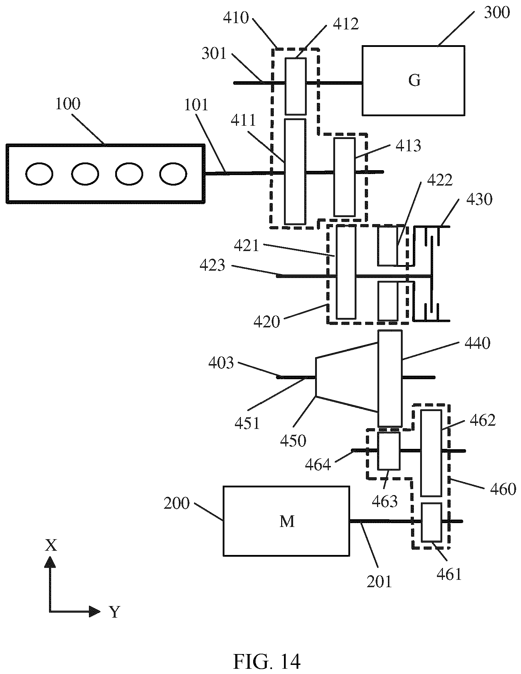

FIG. 14 is a schematic diagram of a structure of a hybrid power drive system 10 according to a fifth embodiment of this application. Different from the first embodiment, in the fifth embodiment, a first gear transmission mechanism 410 further includes a first speed reducing gear 413. The first speed reducing gear 413 is mounted on an output shaft 101 of an engine 100, and a second gear transmission mechanism 420 is in transmission connection with the first speed reducing gear 413. In this embodiment, the first gear transmission mechanism 410 includes a first drive gear 411, a first driven gear 412, and the first speed reducing gear 413. The first drive gear 411 is meshed with the first driven gear 412, and the first speed reducing gear 413 is meshed with a second driven gear 421 in the second gear transmission mechanism 420. The first speed reducing gear 413 and the first drive gear 411 are relatively fastened on the output shaft 101 of the engine 100. The first speed reducing gear 413 rotates synchronously with the first drive gear 411. In an implementation, a radius of the first speed reducing gear 413 is less than a radius of the first drive gear 411, so that a linear velocity at which the first speed reducing gear 413 rotates is less than a linear velocity at which the first drive gear 411 rotates. In this embodiment, a radius of the second driven gear 421 is less than the radius of the first drive gear 411, so that speed reducing can be implemented when power output by the engine 100 is transferred to the second driven gear 421 through the first gear transmission mechanism 410.

In this embodiment, the first speed reducing gear 413 is located on a side that is of the first drive gear 411 and that is away from the engine 100. In some embodiments, the first speed reducing gear 413 may alternatively be located between the engine 100 and the first drive gear 411.

The first gear transmission mechanism 410 in a gearbox 400 in the hybrid power drive system 10 in this embodiment has two gears (the first drive gear 411 and the first speed reducing gear 413) in an axial direction of the engine 100. Compared with the first embodiment, in this embodiment, a dimension of the gearbox 400 in the axial direction of the engine 100 lengthens, and this embodiment may be applicable to a vehicle 1 with large space in the axial direction of the engine 100. However, in this embodiment, because the engine 100 and a drive motor 200 are still located on a same side of the gearbox 400 in the axial direction of the engine 100, an overall volume of the hybrid power drive system 10 is reduced.

In this embodiment, the power output by the engine 100 is transferred to a differential 450 by sequentially using the first drive gear 411, the first speed reducing gear 413, the second driven gear 421, a clutch 430 in a connected state, a second drive gear 422, a second idler gear 426, and a common driven gear 440, and the differential 450 transfers the power to wheels 12 to drive the wheels 12 to run.

It should be noted that, possible implementations, position relationships, and structure descriptions of the engine 100, the generator 300, the drive motor 200, the power battery 500, and the controller 600 in the first embodiment are applicable to possible implementations, position relationships, and structure descriptions of the engine 100, a generator 300, the drive motor 200, a power battery 500, and a controller 600 in the fifth embodiment. Possible implementations, position relationships, and structure descriptions of the second gear transmission mechanism 420, the third gear transmission mechanism 460, the common driven gear 440, and the differential 450 in the gearbox 400 in the first embodiment are applicable to possible implementations, position relationships, and structures of the second gear transmission mechanism 420, a third gear transmission mechanism 460, the common driven gear 440, and the differential 450 in the fifth embodiment. Descriptions of the first drive gear 411 and the first driven gear 412 in the first gear transmission mechanism 410 in the first embodiment are also applicable to descriptions of the first drive gear 411 and the first driven gear 412 in the first gear transmission mechanism 410 in the fifth embodiment. The hybrid power drive system 10 in the fifth embodiment can also implement the five working modes of the hybrid power drive system in the first embodiment. Details are not described herein again.

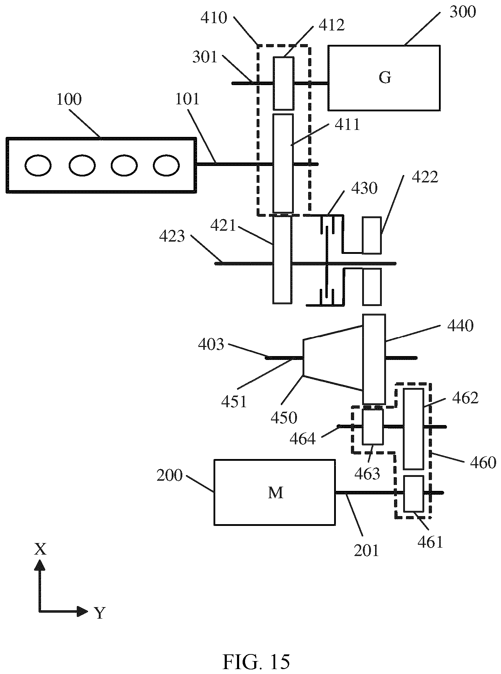

FIG. 15 is a schematic diagram of a structure of a hybrid power drive system 10 according to a sixth embodiment of this application. Different from the first embodiment, in the sixth embodiment, positions of a clutch 430 and a second drive gear 422 are different from those in the first embodiment. Specifically, in this embodiment, the clutch 430 is located between a second driven gear 421 and the second drive gear 422 in an axial direction of a first intermediate shaft 423, and a common driven gear 440 is meshed with the second drive gear 422. In this embodiment, the second drive gear 422 is externally disposed, so that both the common driven gear 440 and a third gear transmission mechanism 460 move rightwards by a specific distance, and a dimension of a gearbox 400 in a first direction Y increases. However, in this embodiment, because a generator 300 has a specific dimension in the first direction Y, and the generator 300 is disposed close to a first gear transmission mechanism 410, even if the third gear transmission mechanism 460 moves rightwards by the specific distance, a dimension between the rightmost end of the third gear transmission mechanism 460 and the leftmost end of the engine 100 in the axial direction may still be less than or equal to a dimension between the rightmost end of the generator 300 and the leftmost end of the engine 100 in the axial direction. In other words, in this embodiment, a distance of the hybrid power drive system 10 in the first direction Y is a dimension between the leftmost end of an engine 100 and the rightmost end of the generator 300 in the axial direction. In this embodiment, the third gear transmission mechanism 460 is moved rightwards by the specific distance, so that a side that is of the gearbox 400 and that faces the engine 100 reserves space for accommodating a drive motor 200. This facilitates placement of the drive motor 200.

In an embodiment, at least one of a first idler gear 424 and a second idler gear 426 may also be disposed in the sixth embodiment, so that the side that is of the gearbox 400 and that faces the engine 100 has large space. This helps place the drive motor 200 and the engine 100 on a same side. For details, refer to the foregoing descriptions. Details are not described herein again.

It should be noted that, possible implementations, position relationships, and structure descriptions of the engine 100, the generator 300, the drive motor 200, the power battery 500, and the controller 600 in the first embodiment are applicable to possible implementations, position relationships, and structure descriptions of the engine 100, the generator 300, the drive motor 200, a power battery 500, and a controller 600 in the sixth embodiment. Possible implementations, position relationships, and structure descriptions of the first gear transmission mechanism 410, the third gear transmission mechanism 460, the common driven gear 440, and the differential 450 in the gearbox 400 in the first embodiment are applicable to possible implementations, position relationships, and structures of the first gear transmission mechanism 410, the third gear transmission mechanism 460, the common driven gear 440, and a differential 450 in the sixth embodiment. Descriptions of the second driven gear 421 and the second drive gear 422 in the second gear transmission mechanism 420 in the first embodiment are also applicable to descriptions of the second driven gear 421 and the second drive gear 422 in a second gear transmission mechanism 420 in the sixth embodiment. The hybrid power drive system 10 in the sixth embodiment can also implement the five working modes of the hybrid power drive system in the first embodiment. Details are not described herein again.

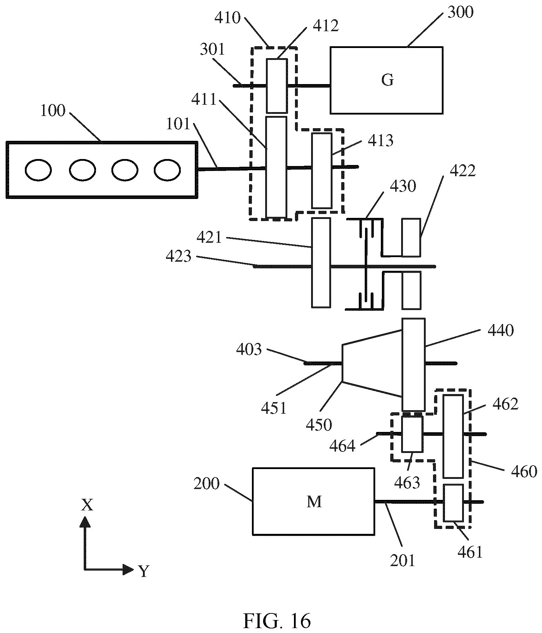

FIG. 16 is a schematic diagram of a structure of a hybrid power drive system 10 according to a seventh embodiment of this application. Different from the sixth embodiment, in the seventh embodiment, a first gear transmission mechanism 410 further includes a first speed reducing gear 413, and the first speed reducing gear 413 is mounted on an output shaft 101 of an engine 100. A radius of the first speed reducing gear 413 is less than a radius of a first drive gear 411, and a second gear transmission mechanism 420 is in transmission connection with the first speed reducing gear 413. In this embodiment, the first gear transmission mechanism 410 includes the first drive gear 411, a first driven gear 412, and the first speed reducing gear 413. The first drive gear 411 is meshed with the first driven gear 412, and the first speed reducing gear 413 is meshed with a second driven gear 421 in the second gear transmission mechanism 420. The first speed reducing gear 413 and the first drive gear 411 are relatively fastened on the output shaft 101 of the engine 100. The first speed reducing gear 413 rotates synchronously with the first drive gear 411. The radius of the first speed reducing gear 413 is less than the radius of the first drive gear 411, so that a linear velocity at which the first speed reducing gear 413 rotates is less than a linear velocity at which the first drive gear 411 rotates. In this embodiment, a radius of the second driven gear 421 is less than the radius of the first drive gear 411, so that speed reducing can be implemented when power output by the engine 100 is transferred to the second driven gear 421 through the first gear transmission mechanism 410.

In this embodiment, the power output by the engine 100 is transferred to a differential 450 by sequentially using the first drive gear 411, the first speed reducing gear 413, the second driven gear 421, a clutch 430 in a connected state, a second drive gear 422, a second idler gear 426, and a common driven gear 440, and the differential 450 transfers the power to wheels 12 to drive the wheels 12 to run.

It should be noted that, possible implementations, position relationships, and structure descriptions of the engine 100, the generator 300, the drive motor 200, the power battery 500, and the controller 600 in the sixth embodiment are applicable to possible implementations, position relationships, and structure descriptions of the engine 100, a generator 300, a drive motor 200, a power battery 500, and a controller 600 in the seventh embodiment. Possible implementations, position relationships, and structure descriptions of the second gear transmission mechanism 420, the third gear transmission mechanism 460, the common driven gear 440, and the differential 450 in the gearbox 400 in the sixth embodiment are applicable to possible implementations, position relationships, and structures of the second gear transmission mechanism 420, a third gear transmission mechanism 460, the common driven gear 440, and the differential 450 in the seventh embodiment. Descriptions of the first drive gear 411 and the first driven gear 412 in the first gear transmission mechanism 410 in the sixth embodiment are also applicable to descriptions of the first drive gear 411 and the first driven gear 412 in the first gear transmission mechanism 410 in the seventh embodiment. The hybrid power drive system 10 in the seventh embodiment can also implement the five working modes of the hybrid power drive system in the first embodiment. Details are not described herein again.

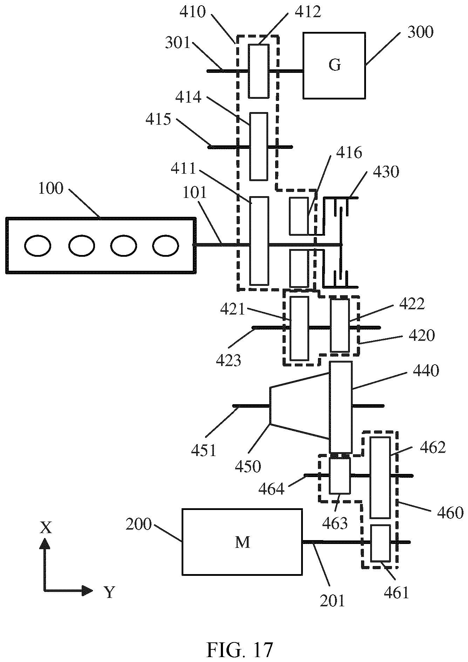

FIG. 17 is a schematic diagram of a structure of a hybrid power drive system 10 according to an eighth embodiment of this application. Different from the first embodiment, in the eighth embodiment, a clutch 430 is mounted on an output shaft 101 of an engine 100. Specifically, in this embodiment, a gearbox 400 includes a first gear transmission mechanism 410 and the clutch 430, and the clutch 430 is mounted on the output shaft 101 of the engine 100. The first gear transmission mechanism 410 includes a first drive gear 411, a third idler gear 414, and a first driven gear 412. The first drive gear 411 is mounted on the output shaft 101 of the engine 100. The first driven gear 412 is mounted on an input shaft 301 of a generator 300, and the third idler gear 414 is located between the first drive gear 411 and the first driven gear 412. An input end of the clutch 430 is in transmission connection with the output shaft 101 of the engine 100, and an output end of the clutch 430 is configured to be in transmission connection with a first output end 403.

In this embodiment, the first gear transmission mechanism 410 further includes a fifth intermediate shaft 415, and the third idler gear 414 is mounted on the fifth intermediate shaft 415.

In this embodiment, the clutch 430 is mounted on the output shaft 101 of the engine 100, so that the output shaft 101 of the engine 100 lengthens. To be able to place the generator 300 on a circumferential side of the clutch 430, the third idler gear 414 is added between the first drive gear 411 and the first driven gear 412, so that a distance between the input shaft 301 of the generator 300 and the output shaft 101 of the engine 100 increases, and the generator 300 can be disposed closer to the first driven gear 412. In an implementation, the generator 300 and the clutch 430 overlap at least partially in an axial direction of the engine 100, to reduce a dimension of the hybrid power drive system 10 in the axial direction.

In a possible implementation, the first gear transmission mechanism 410 further includes a first output gear 416, and the first output gear 416 is mounted on the output shaft 101 of the engine 100. The first output gear 416 is located between the first drive gear 411 and the clutch 430, the first output gear 416 is fastened to the output end of the clutch 430, and the first output gear 416 is in transmission connection with the first output end 403.

In a possible implementation, a second gear transmission mechanism 420 includes a second driven gear 421, a second drive gear 422, and a first intermediate shaft 423. The second driven gear 421 and the second drive gear 422 are mounted on the first intermediate shaft 423, the second driven gear 421 is in transmission connection with the first output gear 416, and the second drive gear 422 is meshed with a common driven gear 440.

In this embodiment, a drive motor 200 and the engine 100 are disposed on a same side of the gearbox 400 in the axial direction of the engine 100. The drive motor 200 is in transmission connection with the common driven gear 440 through a third gear drive mechanism 460.

In this embodiment, the first gear transmission mechanism 410 is a first-stage speed increasing gear mechanism, and the second gear transmission mechanism 420 and the third gear transmission mechanism 460 are speed reducing gear mechanisms.

In this embodiment, power output by the engine 100 is transferred to a differential 450 by sequentially using the first drive gear 411, the clutch 430 in a connected state, the first output gear 416, the second driven gear 421, the second drive gear 422, and the common driven gear 440, and the differential 450 transfers the power to wheels 12 to drive the wheels 12 to run.

In this embodiment, the power output by the engine 100 is further transferred to the generator 300 by sequentially using the first drive gear 411, the third idler gear 414, and the first driven gear 412.

In this embodiment, when the generator 300 is used as an engine, power output by the generator 300 is transferred to the differential 450 by sequentially using the first driven gear 412, the third idler gear 414, the first drive gear 411, the clutch 430 in the connected state, the first output gear 416, the second driven gear 421, the second drive gear 422, and the common driven gear 440, and the differential 450 transfers the power to the wheels 12 to drive the wheels 12 to run.

In this embodiment, power output by the drive motor 200 also drives the differential 450 to run by sequentially using a first-stage drive gear 461, a first-stage driven gear 462, a second-stage drive gear 463, and the common driven gear 440.

It should be noted that, possible implementations, position relationships, and structure descriptions of the engine 100, the generator 300, the drive motor 200, the power battery 500, and the controller 600 in the first embodiment are applicable to possible implementations, position relationships, and structure descriptions of the engine 100, the generator 300, the drive motor 200, a power battery 500, and a controller 600 in the fourth embodiment. Possible implementations, position relationships, and structure descriptions of the third gear transmission mechanism 460, the clutch 430, the common driven gear 440, and the differential 450 in the gearbox 400 in the first embodiment are applicable to possible implementations, position relationships, and structures of the third gear transmission mechanism 460, the clutch 430, the common driven gear 440, and the differential 450 in the fourth embodiment. The hybrid power drive system 10 in the eighth embodiment can also implement the five working modes of the hybrid power drive system in the first embodiment. Details are not described herein again.

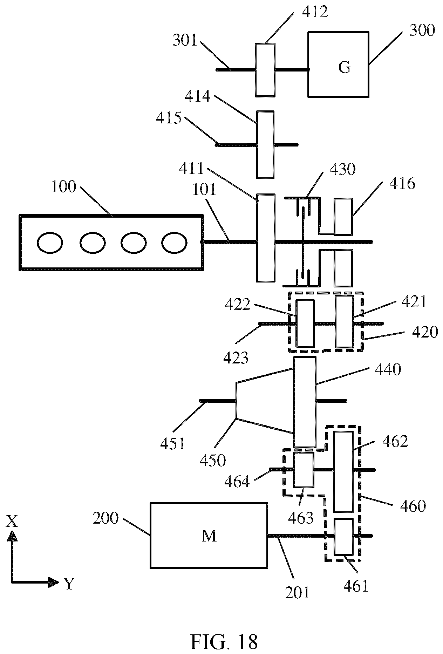

FIG. 18 is a schematic diagram of a structure of a hybrid power drive system 10 according to a ninth embodiment of this application. Different from the eighth embodiment, in the ninth embodiment, a clutch 430 is located between a first drive gear 411 and a first output gear 416, and in an axial direction of an engine 100, a second driven gear 421 is located on a side that is of a second drive gear 422 and that is away from the engine 100. Others are the same as those in the eighth embodiment.

In this embodiment, power output by the engine 100 is transferred to a differential 450 by sequentially using the first drive gear 411, the clutch 430 in a connected state, the first output gear 416, the second driven gear 421, the second drive gear 422, and a common driven gear 440, and the differential 450 transfers the power to wheels 12 to drive the wheels 12 to run.

In this embodiment, the power output by the engine 100 is further transferred to a generator 300 by sequentially using the first drive gear 411, a third idler gear 414, and a first driven gear 412.

In this embodiment, when the generator 300 is used as an engine, power output by the generator 300 is transferred to the differential 450 by sequentially using the first driven gear 412, the third idler gear 414, the first drive gear 411, the clutch 430 in the connected state, the first output gear 416, the second driven gear 421, the second drive gear 422, and the common driven gear 440, and the differential 450 transfers the power to the wheels 12 to drive the wheels 12 to run.

In this embodiment, power output by a drive motor 200 also drives the differential 450 to run by sequentially using a first-stage drive gear 461, a first-stage driven gear 462, a second-stage drive gear 463, and the common driven gear 440.

It should be noted that, possible implementations, position relationships, and structure descriptions of the engine 100, the generator 300, the drive motor 200, the power battery 500, and the controller 600 in the eighth embodiment are applicable to possible implementations, position relationships, and structure descriptions of the engine 100, the generator 300, a drive motor 200, a power battery 500, and a controller 600 in the ninth embodiment. Possible implementations, position relationships, and structure descriptions of the third gear transmission mechanism 460, the clutch 430, the common driven gear 440, and the differential 450 in the gearbox 400 in the eighth embodiment are applicable to possible implementations, position relationships, and structures of a third gear transmission mechanism 460, the clutch 430, the common driven gear 440, and the differential 450 in the ninth embodiment. The hybrid power drive system 10 in the ninth embodiment can also implement the five working modes of the hybrid power drive system in the first embodiment. Details are not described herein again.

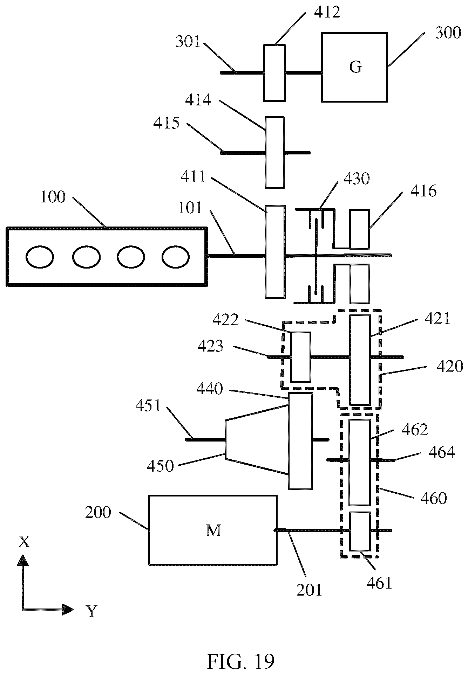

FIG. 19 is a schematic diagram of a structure of a hybrid power drive system 10 according to a tenth embodiment of this application. Different from the eighth embodiment, in the tenth embodiment, a third gear transmission mechanism 460 includes a first-stage drive gear 461 and a first-stage driven gear 462. The first-stage drive gear 461 is mounted on an output shaft 201 of a drive motor 200, the first-stage driven gear 462 is meshed with the first-stage drive gear 461, and the first-stage driven gear 462 is further meshed with a common driven gear 440. The first-stage driven gear 462 is mounted on a second intermediate shaft 464.

In this embodiment, power output by an engine 100 is transferred to a differential 450 by sequentially using a first drive gear 411, a clutch 430 in a connected state, a first output gear 416, a second driven gear 421, a second drive gear 422, and the common driven gear 440, and the differential 450 transfers the power to wheels 12 to drive the wheels 12 to run.

In this embodiment, the power output by the engine 100 is further transferred to a generator 300 by sequentially using the first drive gear 411, a third idler gear 414, and a first driven gear 412.

In this embodiment, when the generator 300 is used as an engine, power output by the generator 300 is transferred to the differential 450 by sequentially using the first driven gear 412, the third idler gear 414, the first drive gear 411, the clutch 430 in the connected state, the first output gear 416, the second driven gear 421, the second drive gear 422, and the common driven gear 440, and the differential 450 transfers the power to the wheels 12 to drive the wheels 12 to run.

In this embodiment, power output by the drive motor 200 also drives the differential 450 to run by sequentially using the first-stage drive gear 461, the first-stage driven gear 462, the second-stage driven gear 421, the second drive gear 422, and the common driven gear 440.

It should be noted that, possible implementations, position relationships, and structure descriptions of the engine 100, the generator 300, the drive motor 200, the power battery 500, and the controller 600 in the eighth embodiment are applicable to possible implementations, position relationships, and structure descriptions of the engine 100, the generator 300, the drive motor 200, a power battery 500, and a controller 600 in the tenth embodiment. Possible implementations, position relationships, and structure descriptions of the first gear transmission mechanism 410, the second gear transmission mechanism 420, the clutch 430, the common driven gear 440, and the differential 450 in the gearbox 400 in the eighth embodiment are applicable to possible implementations, position relationships, and structures of the third gear transmission mechanism 460, the clutch 430, the common driven gear 440, and the differential 450 in the tenth embodiment. The hybrid power drive system 10 in the tenth embodiment can also implement the five working modes of the hybrid power drive system in the first embodiment. Details are not described herein again.

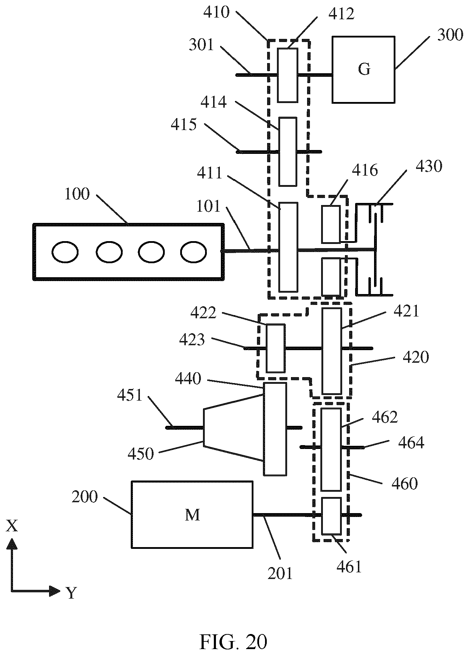

FIG. 20 is a schematic diagram of a structure of a hybrid power drive system 10 according to an eleventh embodiment of this application. Different from the tenth embodiment, in the eleventh embodiment, a first output gear 416 is located between a first drive gear 411 and a clutch 430. When a one-gear distance by which a second gear transmission mechanism 420, a common driven gear 440, a differential 450, and a third gear transmission mechanism 460 that are in transmission connection with the first output gear 416 move towards a side close to an engine 100, a dimension of a gearbox 400 in an axial direction can be reduced.

In this embodiment, power transmission paths of the engine 100, a drive motor 200, and a generator 300 are the same as those in the tenth embodiment. Details are not described herein again. It should be noted that, possible implementations, position relationships, and structure descriptions of the engine 100, the generator 300, the drive motor 200, the power battery 500, and the controller 600 in the tenth embodiment are applicable to possible implementations, position relationships, and structure descriptions of the engine 100, the generator 300, the drive motor 200, a power battery 500, and a controller 600 in the eleventh embodiment. Possible implementations, position relationships, and structure descriptions of the second gear transmission mechanism 420, the clutch 430, the common driven gear 440, and the differential 450 in the gearbox 400 in the tenth embodiment are applicable to possible implementations, position relationships, and structures of the third gear transmission mechanism 460, the clutch 430, the common driven gear 440, and the differential 450 in the eleventh embodiment. The hybrid power drive system 10 in the eleventh embodiment can also implement the five working modes of the hybrid power drive system in the first embodiment. Details are not described herein again.

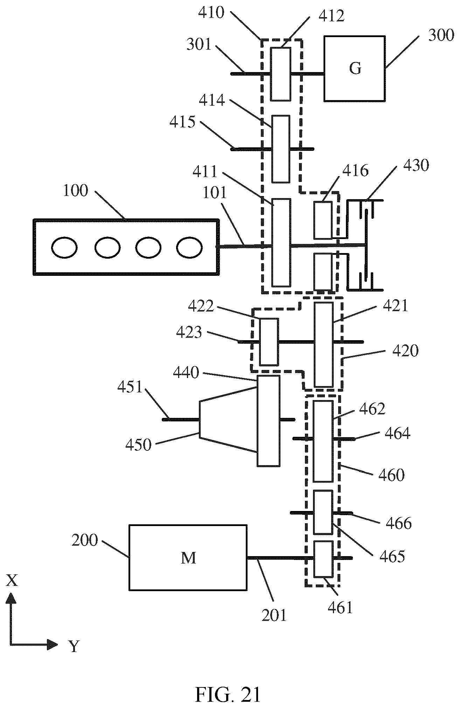

FIG. 21 is a schematic diagram of a structure of a hybrid power drive system 10 according to a twelfth embodiment of this application. Different from the eleventh embodiment, in the twelfth embodiment, a third gear transmission mechanism 460 further includes a fourth idler gear 465 and a sixth intermediate shaft 466. The fourth idler gear 465 is mounted on the sixth intermediate shaft 466, and the fourth idler gear 465 is located between a first-stage drive gear 461 and a first-stage driven gear 462. The fourth idler gear 465 is meshed with the first-stage drive gear 461 and the first-stage driven gear 462. In this embodiment, a distance between a second intermediate shaft 464 and an output shaft 201 of a drive motor 200 may be increased by using the fourth idler gear 465, to provide accommodation space for the drive motor 200. This helps mount the drive motor 200 and an engine 100 on a same side.

In this embodiment, power output by the engine 100 is transferred to a differential 450 by sequentially using a first drive gear 411, a clutch 430 in a connected state, a first output gear 416, a second driven gear 421, a second drive gear 422, and a common driven gear 440, and the differential 450 transfers the power to wheels 12 to drive the wheels 12 to run.

In this embodiment, the power output by the engine 100 is further transferred to a generator 300 by sequentially using the first drive gear 411, a third idler gear 414, and a first driven gear 412.

In this embodiment, when the generator 300 is used as an engine, power output by the generator 300 is transferred to the differential 450 by sequentially using the first driven gear 412, the third idler gear 414, the first drive gear 411, the clutch 430 in the connected state, the first output gear 416, the second driven gear 421, the second drive gear 422, and the common driven gear 440, and the differential 450 transfers the power to the wheels 12 to drive the wheels 12 to run.

In this embodiment, power output by the drive motor 200 also drives the differential 450 to run by sequentially using the first-stage drive gear 461, the fourth idler gear 465, the first-stage driven gear 462, the second driven gear 421, the second drive gear 422, and the common driven gear 440.

It should be noted that, possible implementations, position relationships, and structure descriptions of the engine 100, the generator 300, the drive motor 200, the power battery 500, and the controller 600 in the eleventh embodiment are applicable to possible implementations, position relationships, and structure descriptions of the engine 100, the generator 300, the drive motor 200, a power battery 500, and a controller 600 in the twelfth embodiment. Possible implementations, position relationships, and structure descriptions of a first gear transmission mechanism 410, the second gear transmission mechanism 420, the clutch 430, the common driven gear 440, and the differential 450 in the gearbox 400 in the eleventh embodiment are applicable to possible implementations, position relationships, and structures of the first gear transmission mechanism 410, the clutch 430, the common driven gear 440, and the differential 450 in the twelfth embodiment. The hybrid power drive system 10 in the twelfth embodiment can also implement the five working modes of the hybrid power drive system in the first embodiment. Details are not described herein again.

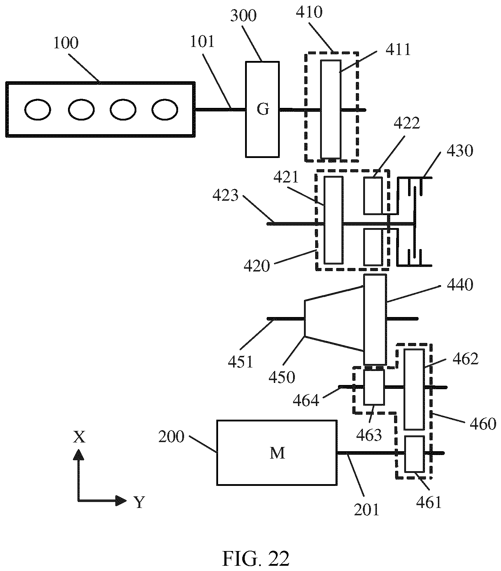

FIG. 22 is a schematic diagram of a structure of a hybrid power drive system 10 according to a thirteenth embodiment of this application. Different from the first embodiment, in the thirteenth embodiment, a generator 300 is mounted on an output shaft 101 of an engine 100. A gearbox 400 further includes a first gear transmission mechanism 410, and the generator 300 is located between the first gear transmission mechanism 400 and the engine 100. An input end of the first gear transmission mechanism 410 is a first input end 401, and the input end of the first gear transmission mechanism 410 is in transmission connection with the output shaft 101 of the engine 100. An output end of the first gear transmission mechanism 410 is in transmission connection with an input end of a second gear transmission mechanism 420. In this embodiment, the generator 300 and the engine 100 are coaxially disposed.

In this embodiment, the first gear transmission mechanism 410 includes a first drive gear 411, and the first drive gear 411 is mounted on an output shaft of the engine 100. The second gear transmission mechanism 420 includes a second driven gear 421, a second drive gear 422, and a first intermediate shaft 423, and the first drive gear 411 is meshed with the second driven gear 421.

It should be noted that, possible implementations, position relationships, and structure descriptions of the engine 100, the drive motor 200, the power battery 500, and the controller 600 in the first embodiment are applicable to possible implementations, position relationships, and structure descriptions of the engine 100, a generator 200, a power battery 500, and a controller 600 in the thirteenth embodiment. Possible implementations, position relationships, and structure descriptions of the second gear transmission mechanism 420, the clutch 430, the common driven gear 440, and the differential 450 in the gearbox 400 in the first embodiment are applicable to possible implementations, position relationships, and structures of the second gear transmission mechanism 420, a clutch 430, a common driven gear 440, and a differential 450 in the thirteenth embodiment. The hybrid power drive system 10 in the thirteenth embodiment can also implement the five working modes of the hybrid power drive system in the first embodiment. Details are not described herein again.

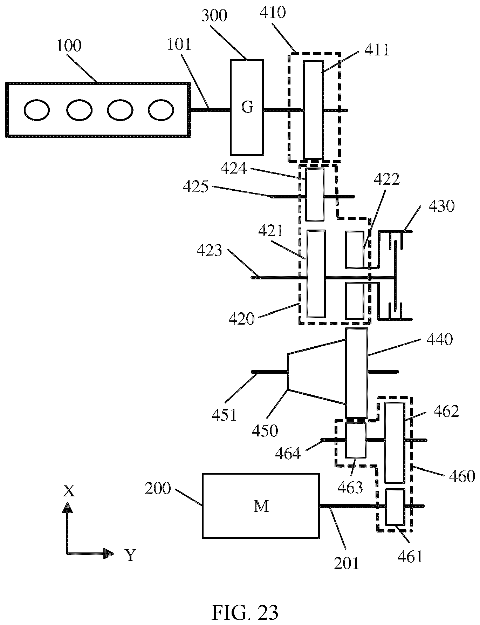

FIG. 23 is a schematic diagram of a structure of a hybrid power drive system 10 according to a fourteenth embodiment of this application Different from the thirteenth embodiment, in the fourteenth embodiment, a second gear transmission mechanism 420 further includes a first idler gear 424 and a third intermediate shaft 425. The first idler gear 424 is mounted between the first drive gear 411 and the second driven gear 421, and is meshed with a first drive gear 411 and a second driven gear 421. A gear rotation direction may be changed by using the first idler gear 424.

It should be noted that, possible implementations, position relationships, and structure descriptions of the engine 100, the drive motor 200, the power battery 500, and the controller 600 in the first embodiment are applicable to possible implementations, position relationships, and structure descriptions of an engine 100, a drive motor 200, a power battery 500, and a controller 600 in the fourteenth embodiment. Possible implementations, position relationships, and structure descriptions of the clutch 430, the common driven gear 440, and the differential 450 in the gearbox 400 in the first embodiment are applicable to possible implementations, position relationships, and structures of a clutch 430, a common driven gear 440, and a differential 450 in the fourteenth embodiment. The hybrid power drive system 10 in the fourteenth embodiment can also implement the five working modes of the hybrid power drive system in the first embodiment. Details are not described herein again.

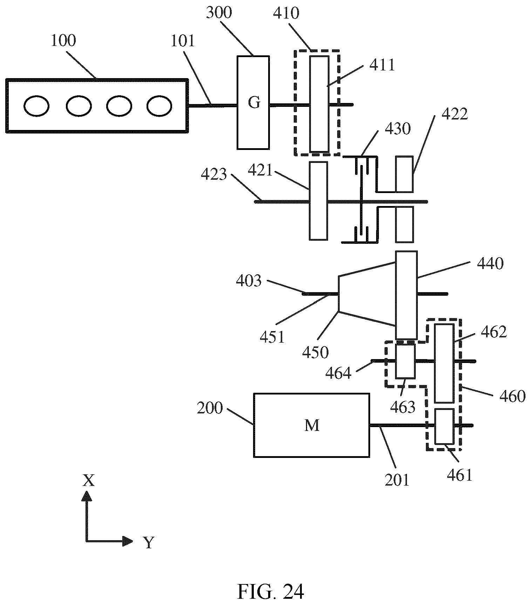

FIG. 24 is a schematic diagram of a structure of a hybrid power drive system 10 according to a fifteenth embodiment of this application. Different from the thirteenth embodiment, in the fifteenth embodiment, positions of a clutch 430 and a second drive gear 422 are different from those in the thirteenth embodiment. Specifically, in this embodiment, the clutch 430 is located between a second driven gear 421 and the second drive gear 422 in an axial direction of a first intermediate shaft 423, and a common driven gear 440 is meshed with the second drive gear 422.

It should be noted that, possible implementations, position relationships, and structure descriptions of the engine 100, the drive motor 200, the power battery 500, and the controller 600 in the first embodiment are applicable to possible implementations, position relationships, and structure descriptions of an engine 100, a drive motor 200, a power battery 500, and a controller 600 in the fifteenth embodiment. Possible implementations, position relationships, and structure descriptions of the common driven gear 440 and the differential 450 in the gearbox 400 in the first embodiment are applicable to possible implementations, position relationships, and structures of the common driven gear 440 and a differential 450 in the fifteenth embodiment. The hybrid power drive system 10 in the fifteenth embodiment can also implement the five working modes of the hybrid power drive system in the first embodiment. Details are not described herein again.

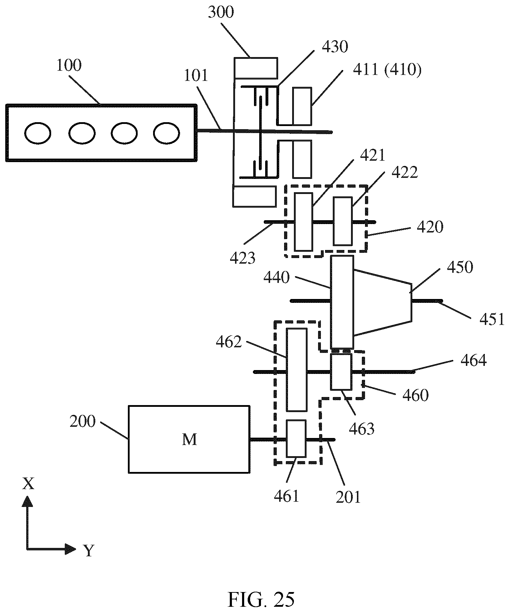

FIG. 25 is a schematic diagram of a structure of a hybrid power drive system 10 according to a sixteenth embodiment of this application. Different from the first embodiment, in the sixteenth embodiment, a gearbox 400 further includes a first gear drive mechanism 410 and a clutch 430. Both a generator 300 and the clutch 430 are mounted on an output shaft 101 of an engine 100 and located between the engine 100 and the first gear transmission mechanism 410. An input end of the clutch 430 is fastened to the output shaft 101 of the engine 100. An output end of the clutch 430 is fastened to an input end of the first gear transmission mechanism 410, and an output end of the first gear transmission mechanism 410 is in transmission connection with a first output end 403. The input end of the clutch 430 is separated from the output end of the clutch 430 and the input end of the clutch 430 is connected to the output end of the clutch 430, to respectively implement disconnection and connection between the output shaft 101 of the engine 100 and the first gear transmission mechanism 410.

In this embodiment, the generator 300 and the engine 100 are coaxially disposed, and the generator 300 is fastened to the output shaft 101 of the engine 100. The output shaft 101 of the engine 300 rotates to drive a rotor of the generator 300 to rotate, so as to drive the generator 300 to generate electricity.

In a possible implementation, there is accommodation space on an inner side of the generator 300, and the clutch 430 may be located in an internal space of the generator 300 (as shown in FIG. 25). It should be noted that a position structure relationship between the clutch 430 and the generator 300 is not limited to a position structure relationship shown in FIG. 25. This is not limited in this application.

In a possible implementation, the first gear transmission mechanism 410 includes a first drive gear 411, and the output end of the clutch 430 is fastened to the first drive gear 411. A second gear transmission mechanism 420 includes a second driven gear 421 and a second drive gear 422. The first drive gear 411 is meshed with the second driven gear 421, and the second drive gear 422 is meshed with a common driven gear 440.

In this embodiment, a differential 450 is located on a side that is of the common driven gear 440 and that is away from the engine 100. In another implementation, the differential 450 may alternatively be located on the side that is of the common driven gear 440 and that faces the engine 100. It should be noted that, in the foregoing first embodiment to fifteenth embodiment, the differential 450 may also be located on the side that is of the common driven gear 440 and that is away from the engine 100.

In this embodiment, a third gear transmission mechanism 460 includes a first-stage drive gear 461, a first-stage driven gear 462, a second-stage drive gear 463, and a second intermediate shaft 464. The first-stage drive gear 461 is mounted on an output shaft 201 of a drive motor 200, and the first-stage driven gear 462 and the second-stage drive gear 463 are mounted on the second intermediate shaft 464. The second-stage drive gear 463 is located on a side that is of the first-stage driven gear 462 and that is away from the engine 100. The first-stage driven gear 462 is meshed with the first-stage drive gear 461, and the second-stage drive gear 463 is meshed with the common driven gear 440.

It should be noted that, possible implementations, position relationships, and structure descriptions of the engine 100, the drive motor 200, the power battery 500, and the controller 600 in the first embodiment are applicable to possible implementations, position relationships, and structure descriptions of the engine 100, the drive motor 200, a power battery 500, and a controller 600 in the sixteenth embodiment. The hybrid power drive system 10 in the sixteenth embodiment can also implement the five working modes of the hybrid power drive system in the first embodiment. Details are not described herein again.

It should be noted that, mirror settings in embodiments of the hybrid power drive system 10 in this application also belongs to the technical solutions protected in this application. A principle is the same as that in the foregoing embodiments. Details are not described herein again.

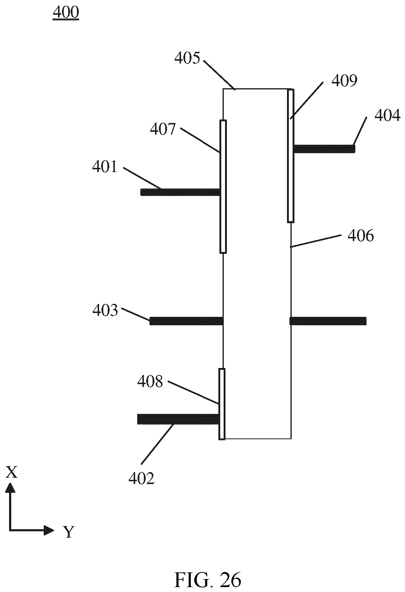

FIG. 26 is a schematic diagram of a structure of a gearbox 400 according to a seventeenth embodiment of this application. In this embodiment, the gearbox 400 is configured to receive power output by an engine 100 and a drive motor 200. The gearbox 400 includes a gearbox body 405, a first output end 403, a first input end 401, and a second input end 402. Both the first input end 401 and the second input end 402 are in transmission connection with the first output end 403 through the gearbox body 405. In an axial direction of the first input end 401, the first input end 401 and the second input end 402 are located on a same side of the gearbox body 405. The first input end 401 is configured to be in transmission connection with an output end of the engine 100 disposed on the side of the gearbox body 405, and is configured to receive power output by the engine 100. The first input end 401 is further configured to be in transmission connection with a generator 300. The second input end 402 is configured to be in transmission connection with an output end of the drive motor 200 disposed on the side of the gearbox body 405, and is configured to receive power output by the drive motor 200. The first output end 403 is configured to: receive the power transmitted by the first input end 401 or the second input end 402, and provide the power to wheels.

In this embodiment, the first input end 401 and the second input end 402 are disposed on the same side of the gearbox body 405, so that the engine 100 connected to the first input end 401 and the drive motor 200 connected to the second input end 402 are located on the same side of the gearbox body 405. This can reduce a dimension of a hybrid power drive system 10 in the axial direction.

In a possible implementation, the gearbox body 405 includes a housing 406. A first mounting surface 407 for installing the engine 100 and a second mounting surface 408 for installing the drive motor 200 are disposed on the housing 406. The first mounting surface 407 and the second mounting surface 408 are located on a same side of the housing in a first direction Y The first direction Y is the axial direction of the first input end 401, and is also an axial direction of the engine 100.

In a possible implementation, a third mounting surface 409 for installing the generator 300 is further disposed on the housing 406. In the first direction Y, the third mounting surface 409 and the first mounting surface 407 are located on two sides of the housing, so that the generator 300 and the engine 100 are located on both sides of the gearbox body 405.

The gearbox body 405 refers to a combination of transmission components such as a gear assembly, a transmission shaft, and a differential.

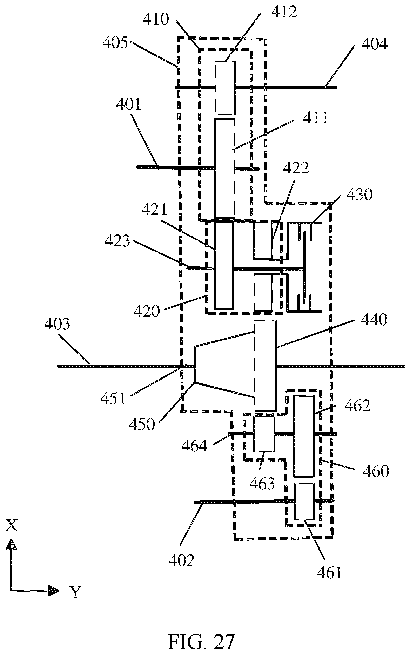

Refer to FIG. 27. In a possible implementation, the gearbox body 405 includes a first gear transmission mechanism 410, a second gear transmission mechanism 420, a clutch 430, a differential 450, a common driven gear 440, and a third gear transmission mechanism 460. In this embodiment, a structure of the gearbox body 405 is the same as a structure of the gearbox in the first embodiment in FIG. 5. Details are not described herein again.

It should be noted that the structure description and the possible implementations of the gearbox in the first embodiment to the sixteenth embodiment are also applicable to the structure description of the gearbox in the seventeenth embodiment. Details are not described herein again. The hybrid power drive system obtained after the gearbox 400 in the seventeenth embodiment, the engine 100, the drive motor 200, and the generator 300 are assembled can also implement the five working modes of the hybrid power drive system in the first embodiment. Details are not described herein again.

The hybrid power drive system and the vehicle provided in embodiments of this application are described in detail above. The principles and embodiments of this application are described herein by using specific examples. The description about the foregoing embodiments is merely provided to help understand the method and core ideas of this application. In addition, a person of ordinary skill in the art can make variations in terms of the specific embodiments and application scopes according to the ideas of this application. In conclusion, the content of this specification shall not be construed as a limitation to this application.

## Claims

1. A hybrid power drive system, comprising:
an engine, configured to output power;
a gearbox, comprising a first input end, a second input end, and a first output end, wherein both the first input end and the second input end are in transmission connection with the first output end, an output shaft of the engine is in transmission connection with the first input end, and the first output end is configured to provide power for wheels;
a drive motor, wherein an output shaft of the drive motor is in transmission connection with the second input end, the drive motor is configured to output power to the second input end, and in an axial direction of the engine, the drive motor and the engine are located on a same side of the gearbox; and
a generator, wherein an input shaft of the generator is in transmission connection with the output shaft of the engine.

2. The hybrid power drive system according to claim 1, wherein the gearbox comprises a second gear transmission mechanism and a clutch; an input end of the second gear transmission mechanism is in transmission connection with the first input end, and an output end of the second gear transmission mechanism is in transmission connection with the first output end; the clutch is configured to connect the second gear transmission mechanism to the first output end or separate the second gear transmission mechanism from the first output end; the second gear transmission mechanism comprises a first intermediate shaft, and the clutch is mounted on the first intermediate shaft; and the first intermediate shaft and the output shaft of the engine are arranged in a direction intersecting with an axial direction of the first intermediate shaft.

3. The hybrid power drive system according to claim 2, wherein the second gear transmission mechanism comprises a second driven gear and a second drive gear that are mounted on the first intermediate shaft, an input end of the second driven gear is in transmission connection with the first input end, the second driven gear is fastened to the first intermediate shaft, the first intermediate shaft is fastened to an input end of the clutch, an output end of the clutch is fastened to the second drive gear, and the second drive gear is in transmission connection with the first output end.

4. The hybrid power drive system according to claim 3, wherein the second drive gear is located between the second driven gear and the clutch in the axial direction of the first intermediate shaft; or
the clutch is located between the second driven gear and the second drive gear in the axial direction of the first intermediate shaft.

5. The hybrid power drive system according to claim 3, wherein the second gear transmission mechanism further comprises a first idler gear, and the first idler gear is mounted between the first input end and the second driven gear.

6. The hybrid power drive system according to any one of claims 2 to 5, wherein in the axial direction of the engine, the generator is located on a side that is of the gearbox and that is away from the engine; the gearbox further comprises a first gear transmission mechanism, and the first gear transmission mechanism is located between the engine and the generator; an input end of the first gear transmission mechanism is the first input end, and the input end of the first gear transmission mechanism is in transmission connection with the output shaft of the engine; and an output end of the first gear transmission mechanism is in transmission connection with the input shaft of the generator, and the output end of the first gear transmission mechanism is further in transmission connection with the input end of the second gear transmission mechanism.

7. The hybrid power drive system according to claim 6, wherein the first gear transmission mechanism comprises a first drive gear mounted between the engine and the generator, the first drive gear is fastened to the output shaft of the engine, the generator and the engine are coaxially disposed, and the second gear transmission mechanism is in transmission connection with the first drive gear;
the first gear transmission mechanism comprises a first drive gear and a first driven gear, the first drive gear is mounted on the output shaft of the engine, the first driven gear is mounted on the input shaft of the generator, the first drive gear is in transmission connection with the first driven gear, and the second gear transmission mechanism is in transmission connection with the first drive gear; or
the first gear transmission mechanism further comprises a first drive gear, a first driven gear, and a first speed reducing gear; the first drive gear and the first speed reducing gear are mounted on the output shaft of the engine, and the first speed reducing gear is located on a side that is of the first drive gear and that is away from the engine; and the first driven gear is mounted on the input shaft of the generator, the first drive gear is in transmission connection with the first driven gear, and the second gear transmission mechanism is in transmission connection with the first speed reducing gear.

8. The hybrid power drive system according to any one of claims 2 to 5, wherein the generator is mounted on the output shaft of the engine, the gearbox further comprises a first gear transmission mechanism, the generator is located between the first gear transmission mechanism and the engine, an input end of the first gear transmission mechanism is the first input end, the input end of the first gear transmission mechanism is in transmission connection with the output shaft of the engine, and an output end of the first gear transmission mechanism is in transmission connection with the input end of the second gear transmission mechanism.

9. The hybrid power drive system according to claim 1, wherein in the axial direction of the engine, the generator is located on a side that is of the gearbox and that is away from the engine; the gearbox further comprises a first gear transmission mechanism and a clutch, and the clutch is mounted on the output shaft of the engine; the first gear transmission mechanism comprises a first drive gear, a third idler gear, and a first driven gear; the first drive gear is mounted on the output shaft of the engine, the first driven gear is mounted on the input shaft of the generator, and the third idler gear is located between the first drive gear and the first driven gear; and an input end of the clutch is fastened to the output shaft of the engine, and an output end of the clutch is in transmission connection with the first output end.

10. The hybrid power drive system according to claim 9, wherein the first gear transmission mechanism further comprises a first output gear mounted on the output shaft of the engine and located between the first drive gear and the clutch, the first output gear is fastened to the output end of the clutch, and the first output gear is in transmission connection with the first output end; or
the first gear transmission mechanism further comprises a first output gear mounted on the output shaft of the engine and located on a side that is of the clutch and that is away from the first drive gear, the first output gear is fastened to the output end of the clutch, and the first output gear is in transmission connection with the first output end.

11. The hybrid power drive system according to claim 1, wherein the gearbox further comprises a first gear transmission mechanism and a clutch, both the generator and the clutch are mounted on the output shaft of the engine and located between the engine and the first gear transmission mechanism, an input end of the clutch is fastened to the output shaft of the engine, an output end of the clutch is fastened to an input end of the first gear transmission mechanism, and an output end of the first gear transmission mechanism is in transmission connection with the first output end.

12. The hybrid power drive system according to any one of claims 2, 9, and 11, wherein the gearbox further comprises:
a common driven gear, wherein the common driven gear is in transmission connection with the output end of the clutch; and
a differential, wherein the differential and the common driven gear are coaxially disposed, an output end of the differential is the first output end, and the output end of the differential is configured to provide power for the wheels.

13. The hybrid power drive system according to claim 12, wherein the gearbox further comprises a second idler gear mounted between the clutch and the common driven gear, and the second idler gear is meshed with the output end of the clutch and the common driven gear; or
the gearbox further comprises a third gear transmission mechanism located between the common driven gear and the drive motor, an input end of the third gear transmission mechanism is the second input end, and an output end of the third gear transmission mechanism is in transmission connection with the common driven gear.

14. A gearbox, configured to receive power output by an engine and a drive motor, wherein the gearbox comprises a gearbox body, a first output end, a first input end, and a second input end; both the first input end and the second input end are in transmission connection with the first output end through the gearbox body; and in an axial direction of the first input end, the first input end and the second input end are located on a same side of the gearbox body;
the first input end is configured to be in transmission connection with an output end of the engine disposed on the side of the gearbox body, and is configured to receive power output by the engine; and the first input end is further configured to be in transmission connection with a generator;
the second input end is configured to be in transmission connection with an output end of the drive motor disposed on the side of the gearbox body, and is configured to receive power output by the drive motor; and
the first output end is configured to: receive the power transmitted by the first input end or the second input end, and provide the power to wheels.

15. The gearbox according to claim 14, wherein the gearbox body comprises a second gear transmission mechanism and a clutch; an input end of the second gear transmission mechanism is in transmission connection with the first input end, and an output end of the second gear transmission mechanism is in transmission connection with the first output end; the clutch is configured to connect the second gear transmission mechanism to the first output end or separate the second gear transmission mechanism from the first output end; the second gear transmission mechanism comprises a first intermediate shaft, and the clutch is mounted on the first intermediate shaft; and the first intermediate shaft and an output shaft of the engine are arranged in a direction intersecting with an axial direction of the first intermediate shaft.

16. The gearbox according to claim 15, wherein the second gear transmission mechanism comprises a second driven gear and a second drive gear that are mounted on the first intermediate shaft, an input end of the second driven gear is in transmission connection with the first input end, the second driven gear is fastened to the first intermediate shaft, the first intermediate shaft is fastened to an input end of the clutch, an output end of the clutch is fastened to the second drive gear, and the second drive gear is in transmission connection with the first output end.

17. The gearbox according to claim 16, wherein the second drive gear is located between the second driven gear and the clutch in the axial direction of the first intermediate shaft; or
the clutch is located between the second driven gear and the second drive gear in the axial direction of the first intermediate shaft.

18. The gearbox according to claim 16, wherein the second gear transmission mechanism further comprises a first idler gear, and the first idler gear is mounted between the first input end and the second driven gear.

19. The gearbox according to any one of claims 15 to 18, wherein the gearbox further comprises a second output end, and the second output end is in transmission connection with the first input end; in an axial direction of the first output end, the second output end is located on a side that is of the gearbox body and that is away from the first input end; and the second output end is configured to be in transmission connection with the generator; and
the gearbox body further comprises a first gear transmission mechanism, and the first gear transmission mechanism is located between the engine and the generator; an input end of the first gear transmission mechanism is the first input end, and the input end of the first gear transmission mechanism is configured to be in transmission connection with the output shaft of the engine; and an output end of the first gear transmission mechanism is in transmission connection with the second output end, and the output end of the first gear transmission mechanism is further in transmission connection with the input end of the second gear transmission mechanism.

20. The gearbox according to claim 19, wherein the first gear transmission mechanism comprises a first drive gear, the first drive gear is configured to be mounted between the engine and the generator; the first drive gear is configured to be fastened to the output shaft of the engine, the generator and the engine are coaxially disposed, and the second gear transmission mechanism is in transmission connection with the first drive gear;
the first gear transmission mechanism comprises a first drive gear and a first driven gear, the first drive gear is configured to be mounted on the output shaft of the engine, the first driven gear is configured to be mounted on an input shaft of the generator, the first drive gear is in transmission connection with the first driven gear, and the second gear transmission mechanism is in transmission connection with the first drive gear; or
the first gear transmission mechanism further comprises a first drive gear, a first driven gear, and a first speed reducing gear; the first drive gear and the first speed reducing gear are configured to be mounted on the output shaft of the engine, and the first speed reducing gear is located on a side that is of the first drive gear and that is away from the engine; and the first driven gear is configured to be mounted on the input shaft of the generator, the first drive gear is in transmission connection with the first driven gear, and the second gear transmission mechanism is in transmission connection with the first speed reducing gear.

21. A vehicle, comprising a vehicle body, wheels, and the hybrid power drive system according to any one of claims 1 to 13 or the gearbox according to any one of claims 14 to 20, wherein the hybrid power drive system or the gearbox is mounted on the vehicle body, and a differential in the hybrid power drive system or the gearbox is in transmission connection with the wheels.
